# EUROPÄISCHE PATENTSCHRIFT

(11) **EP 2 130 698 B1**
(45) Veröffentlichungstag und Bekanntmachung des Hinweises auf die Patenterteilung: **28.01.2015**
(21) Anmeldenummer: 09007509.4
(22) Anmeldetag: 06.06.2009
(51) Int. Cl.: B60D 1/06, B60D 1/52

(54) **Anhängekupplung**
Tow bar
Attelage

(30) Priorität: 06.06.2008 DE 202008007581 U; 06.06.2008 DE 202008007582 U; 26.07.2008 DE 102008034847
(43) Veröffentlichungstag der Anmeldung: 09.12.2009
(73) Patentinhaber: WESTFALIA - Automotive GmbH, 33378 Rheda-Wiedenbrück (DE)
(72) Erfinder: Abels, Frank, D-29633 Munster (DE)
(74) Vertreter: Patentanwälte Bregenzer und Reule Partnerschaftsgesellschaft mbB

(56) Entgegenhaltungen:
- DE-A1- 4 142 317
- DE-A1- 10 027 571
- DE-A1- 10 355 854
- DE-A1- 19 749 544
- DE-U1-202007 007 331

## Beschreibung

Die Erfindung betrifft eine Anhängekupplung mit einem Halter zur Befestigung an einem Kraftfahrzeug, insbesondere einem Personen-Kraftfahrzeug, mit einem in einer Einsteckrichtung in eine Steckaufnahme des Halters einsteckbaren Kupplungsarm zum Anhängen eines Anhängers, gemäß dem Oberbegriff des Anspruchs 1.

Eine derartige Anhängekupplung ist beispielsweise aus DE 197 49 544 A1 bekannt. Die Anhängekupplung weist einen Servomotor als Verriegelungsantrieb auf, der beispielsweise mittels eines Kontakts an der Steckaufnahme einschaltbar ist. Der Kontakt wird durch den Kupplungsarm beim Einstecken in die Steckaufnahme betätigt und schaltet den Motor ein. Zum Lösen der Verriegelungseinrichtung beziehungsweise zum Einschalten des Verriegelungsantriebs in Richtung der Entriegelungsstellung dient ein vorzugsweise im Kofferraum befindlicher Schalter, nach dessen Betätigung der Verriegelungsantrieb die Verriegelungseinrichtung entriegelt, so dass der Kupplungsarm aus der Steckaufnahme entnehmbar ist. DE 197 49 544 A1 sieht vor, den Kupplungsarm mit den Händen abzufangen und ihn dann wegzulegen.

Eine solche Vorgehensweise setzt jedoch voraus, dass der Bediener schnell den Kupplungsarm ergreift, bevor dieser zu Boden fällt. Die Bedienung ist unkomfortabel und riskant. Es besteht die Gefahr, dass der Kupplungsarm frei auf den Boden fällt, was zu Beschädigungen führen kann und zudem eine erhebliche Verletzungsgefahr darstellt.

Aus EP 1 024 036 A1 geht eine Anhängekupplung mit einem schwenkbaren Kugelhals hervor, der mit einer Fixiereinrichtung bezüglich eines fahrzeugseitigen Lagerteils fixierbar ist. Die Fixiereinrichtung ist mit einem Löseantrieb lösbar, der einen mit einem Schalter schaltbaren Elektromotor umfasst.

Es ist daher die Aufgabe der vorliegenden Erfindung, ein komfortables, sicheres Bedienkonzept für eine Anhängekupplung der eingangs genannten Art bereitzustellen.

Zur Lösung der Aufgabe ist eine Anhängekupplung gemäß der technischen Lehre des Anspruchs 1 vorgesehen.

Das Betätigungselement ist erfindungsgemäß im Außenbereich des Kraftfahrzeugs nahe der Steckaufnahme angeordnet. Der Bediener kann somit gleichzeitig oder in kurzem Abstand zunächst das Bedienungselement betätigen und sodann den Kupplungsarm ergreifen oder beide Bedienhandlungen zugleich ausführen, beispielsweise mit einer Hand den Kupplungsarm ergreifen und mit der anderen das Betätigungselement betätigen. Das Betätigungselement ist zweckmäßigerweise in dem Bedienbereich angeordnet, zweckmäßigerweise an oder neben der Steckaufnahme. Im Gegensatz zu einem Antriebsschalter beispielsweise im Cockpit des Kraftfahrzeugs oder im Kofferraum muss sich der Bediener nicht vom Antriebsschalter zum Kupplungsarm bewegen, sondern ist sozusagen vor Ort. Mit Hilfe des erfindungsgemäß im Bedienbereich des Kupplungsarms be-ziehungsweise im Bereich der Steckaufnahme angeordneten Betätigungselements kann eine reine Entriegelung oder eine reine Verriegelung der Verriegelungseinrichtung schaltbar sein. Vorzugsweise ist zumindest die Entriegelung auf diese Weise möglich. Aber auch bei einer Verriegelung mittels des Antriebsschalters ist das erfindungsgemäße Konzept sinnvoll, da der Bediener den Kupplungsarm halten und zugleich den Antriebsschalter betätigen kann.

Für das Betätigungselement, insbesondere den Antriebsschalter mit dem Betätigungselement, sind verschiedenartige Anbringungsorte in der Nähe der Steckaufnahme möglich.

So sieht zum Beispiel eine bevorzugte Variante der Erfindung vor, dass das Betätigungselement und/oder der Antriebsschalter an einem Bedienteilträger angeordnet sind, der von einem Haltergehäuse des Halters separat ist, an dem wiederum die Steckaufnahme für den Kupplungsarm angeordnet ist. Dieser Bedienteilträger kann ein separater, lediglich das Bedienteil, gegebenenfalls noch den Antriebsschalter tragender Bedienteilträger sein. Es ist aber auch möglich, dass dieser Bedienteilträger eine Doppelfunktion erfüllt und zudem noch eine Anhänger-Steckdose zum elektrischen und/oder signal-optischen Anschluss des Anhängers an das Kraftfahrzeug trägt.

Der Bedienteilträger weist zweckmäßigerweise einen seitlich neben der Steckaufnahme angeordneten oder neben dem in die Steckaufnahme gesteckten Kupplungsarm tangential verlaufenden Tragabschnitt auf, an dem das Betätigungselement, gegebenenfalls auch der Antriebsschalter, angeordnet sind. Somit ist der Antriebsschalter beziehungsweise dessen Betätigungselement unmittelbar in der Nähe des Kupplungsarms positioniert, wo eine leichte Betätigung beziehungsweise ein leichter Zugriff möglich ist.

Das Betätigungselement, insbesondere auch der Antriebsschalter, können aber auch an anderen Anbringungsorten vorgesehen sein, beispielsweise an einem Karosserieteil des Kraftfahrzeugs, an dem Haltergehäuse oder dem Halter beziehungsweise dem Haltergehäuse, das die Steckaufnahme aufweist. Ferner ist es denkbar, den Antriebsschalter und/oder das Betätigungselement an einem Träger, der den Halter für den Kupplungsarm trägt, anzuordnen, beispielsweise einem Fahrzeugquerträger, an dem der Halter angeordnet ist. Auch an einem Antriebsgehäuse für den Verriegelungsantrieb können das Betätigungselement und/oder der Antriebsschalter angeordnet sein.

Weiterhin ist es denkbar, das Betätigungselement und/oder den Antriebsschalter am Kupplungsarm anzuordnen. Die Kopplung mit dem Verriegelungsantrieb kann beispielsweise drahtlos erfolgen. Diese Bedienweise ist besonders vorteilhaft, weil der Bediener mit der den Kupplungsarm ergreifenden Hand gleichzeitig den Antriebsschalter, zumindest dessen Betätigungselement, betätigen kann. Es ist auch möglich, dass das Betätigungselement beziehungsweise der Antriebsschalter beispielsweise mittels elektrischer Kontakte am Kupplungsarm und korrespondierend am Halter miteinander kommunizieren. Ferner ist es möglich, das Betätigungselement beweglich am Kupplungsarm zu lagern. Das Betätigungselement betätigt bei seiner Betätigung beispielsweise einen am Halter ortsfest angeordneten Antriebsschalter. Beispielsweise steht dann ein Betätigungsende des zum Beispiel stangenartigen Betätigungselements zu dem Antriebsschalter vor und betätigt diesen.

Eine weitere Variante der Erfindung sieht vor, dass das Betätigungselement und/oder der Antriebsschalter an einer Anhänger-Steckdose zur elektrischen und/oder signal-optischen Versorgung des Anhängers angeordnet sind, beispielsweise am Steckdosengehäuse, am Dosendeckel oder dergleichen. Diese Variante hat insbesondere dann, wenn das Betätigungselement oder der Antriebsschalter elektrisch funktionieren, den Vorteil, dass Kabelverbindungen bereits zur Anhänger-Steckdose geführt sind. Die Kabelwege sind dadurch kurz. Eine Mantelung oder Kapselung der elektrischen Komponenten ist einfach realisierbar.

Der Antriebsschalter ist nämlich gemäß einer bevorzugten Ausführungsform der Erfindung ein elektrischer Antriebsschalter. Es versteht sich, dass beispielsweise bei einem pneumatischen oder hydraulischen Verriegelungsantrieb auch mechanische Antriebsschalter, beispielsweise Schaltventile, insbesondere Sperrventile, als Antriebsschalter in Frage kommen.

Der Antriebsschalter oder das Betätigungselement sind zweckmäßigerweise drahtlos, beispielsweise magnetisch, kapazitiv, per Funk oder Infrarotwellen, betätigbar. Somit ist ein unmittelbarer mechanischer Kontakt nicht nötig. Dadurch ergeben sich größere Freiheiten bezüglich des Anbringungsortes.

Das Betätigungselement umfasst beispielsweise einen Funkempfänger mit einem im Wesentlichen auf den Bedienbereich begrenzten Empfangsbereich. Nur wenn der Bediener im Bedienbereich und somit dem Empfangsbereich des Funkempfängers zum Entfernen oder Anbringen des Kupplungsarms am Halter agiert, ist das Betätigungselement aktivierbar. Es versteht sich, dass zur Betätigung des Antriebsschalters ausschließlich ein drahtloses Konzept vorgesehen sein kann oder auch ein kombiniertes, mechanisch-drahtloses Bedienkonzept, bei dem beispielsweise das drahtlose Betätigungselement das vom Bediener per Handbetätigung zu betätigende Betätigungselement sozusagen freischaltet.

Der Funkempfänger ist vorzugsweise im Außenbereich des Kraftfahrzeugs in der Nähe der Steckaufnahme angeordnet, beispielsweise am Halter, am oder im Antriebsgehäuse für den Verriegelungsantrieb oder dergleichen. Es ist aber auch möglich, den Funkempfänger beispielsweise im Innenraum des Kraftfahrzeugs anzuordnen und den Empfangsbereich entsprechend nach außen auszugestalten. Der Sender für den Funkempfänger ist nur im Nahbereich des Halters beziehungsweise des Kupplungsarms aktiv. Außerhalb des Empfangsbereichs des Funkempfängers kann der Sender keine Auslösung des Betätigungselements bewirken. Der Funkbereich ist ähnlich wie beispielsweise bei sogenannten RFID-Transpondern örtlich begrenzt.

Der Funkempfänger und/oder ein Sender dafür kann beispielsweise in der Art eines Transponders ausgestaltet sein.

Der begrenzte Bedienbereich beziehungsweise Empfangsbereich stellt eine zusätzliche Sicherheitsfunktion dar.

Ein Sender für den Funkempfänger, beispielsweise ein Transponder oder ein aktiver, batteriebetriebener Sender, ist zweckmäßigerweise an oder in einem Fahrzeugschlüssel für das Kraftfahrzeug, einem Gehäuse eines Schlüsselanhängers oder dergleichen angeordnet. Beispielsweise kann man den Funkempfänger im Gehäuse für den Fahrzeugschlüssel, zum Beispiel dessen Griff, anordnen.

Der Antriebsschalter ist zweckmäßigerweise zum Auslösen einer Entriegelungsbewegung des Verriegelungsantriebs von der Verriegelungs- in die Entriegelungsstellung und/oder umgekehrt ausgestaltet. Die Verriegelungsbewegung und die Entriegelungsbewegung sind einander entgegengesetzt. Das Betätigungselement und/oder der Antriebsschalter sind zweckmäßigerweise abhängig von einer Stellung eines Deckels, beispielsweise eines Dosendeckels einer Anhänger-Steckdose zum elektrischen und/oder signal-optischen Anschluss des Anhängers an das Kraftfahrzeug inaktivierbar. So ist es beispielsweise möglich, das Betätigungselement mittels eines separaten Deckels abzudecken, so dass nur bei geöffnetem Deckel eine Betätigung möglich ist. Umwelteinflüsse, beispielsweise Steinschlag, oder sonstige umherfliegende Gegenstände beim Fahrbetrieb des Kraftfahrzeugs können somit das Betätigungselement nicht auslösen. Somit ist eine Fehlbedienung oder eine Fehlfunktion des Verriegelungsantriebs ausgeschlossen.

Besonders bevorzugt ist es, dass zur Inaktivierung der Deckel der Anhänger-Steckdose verwendet wird. So kann beispielsweise bei einer Variante der Erfindung vorgesehen sein, dass der Dosendeckel in seinem offenen Zustand das Betätigungselement verdeckt. Der Dosendeckel ist geöffnet, wenn ein Anhängerstecker in die Anhänger-Steckdose eingesteckt ist. Somit muss also zunächst der Anhängerstecker entfernt werden, bevor das Betätigungselement zugänglich ist und somit der Kupplungsarm beispielsweise entriegelbar ist. Zur Realisierung dieser Maßnahme sind die Anhänger-Steckdose und das Betätigungselement beziehungsweise der das Betätigungselement enthaltende Antriebsschalter zweckmäßigerweise zueinander winkelig angeordnet. Dies ist beispielsweise dadurch möglich, dass der Steckdosenträger oder der Bedienteilträger entsprechend winkelige Tragabschnitte zum einen für die Anhänger-Steckdose und zum anderen für das Bedienelement und/oder den Antriebsschalter aufweisen.

Eine weitere Variante kann auch vorsehen, dass die Anhänger-Steckdose einen durch den Dosendeckel betätigbaren Aktivierungsschalter zum Aktivieren des Antriebsschalters bei geschlossenem Dosendeckel und zum Deaktivieren des Antriebsschalters bei offenem Dosendeckel aufweist. Wenn also der Dosendeckel geöffnet ist, ist der Antriebsschalter nicht betätigbar. In diesem Zusammenhang sei erwähnt, dass auch ein separater, lediglich zum Abdecken des Betätigungselements vorgesehener Deckel einen entsprechenden Aktivierungsschalter zum Aktivieren und Deaktivieren des Antriebsschalters aufweisen kann. Dadurch ist ein redundantes Sicherheitskonzept realisierbar.

Der Antriebsschalter und das Betätigungselement können voneinander separate Bauelemente sein. Vorzugsweise sind jedoch beide Komponenten in einem gemeinsamen Betätigungsgehäuse oder Schaltergehäuse angeordnet.

Es ist aber auch möglich, den Antriebsschalter beispielsweise in einem Innenraum des Kraftfahrzeugs anzuordnen und zwischen dem Betätigungselement und dem Antriebsschalter mindestens ein Übertragungsglied anzuordnen.

Wie vorher schon erläutert, ist eine drahtlose Kopplung zwischen Antriebsschalter und Bedienelement möglich.

Das Übertragungsglied umfasst vorzugsweise mindestens ein mechanisches Übertragungsglied, vorzugsweise einen Seilzug, einen Bowdenzug, ein Übertragungsgetriebe, ein Übertragungsgestänge oder dergleichen. Auch ein fluidisches, insbesondere ein pneumatisches Übertragungskonzept ist denkbar. So kann das Übertragungsglied beispielsweise einen Luftschlauch aufweisen.

Weiterhin ist es vorteilhaft, wenn dem Bediener mindestens eine Funktion der Verriegelungseinrichtung angezeigt wird, zweckmäßigerweise vor Ort im Bedienbereich des Halters und/oder auch im Innenraum des Kraftfahrzeugs, beispielsweise im Cockpit.

Die erfindungsgemäße Anhängekupplung weist dazu zweckmäßigerweise mindestens eine optische und/oder akustische Funktionsanzeigeeinrichtung für mindestens eine Funktionsanzeige der Verriegelungseinrichtung auf. Es ist auch möglich, dass lediglich ein Signalausgang zur Ansteuerung einer Funktionsanzeigeeinrichtung des Kraftfahrzeugs vorgesehen ist, beispielsweise ein Display im Cockpit des Kraftfahrzeugs.

Die Funktionsanzeigeeinrichtung kann beispielsweise eine Verriegelung, eine Entriegelung, eine Fehlfunktion der Verriegelungseinrichtung oder dergleichen anzeigen. Auch die Anzeige eines Fahrbetriebs des Verriegelungsantriebs ist mittels der Funktionsanzeige realisierbar.

Die Funktionsanzeigeeinrichtung ist zweckmäßigerweise im Bedienbereich angeordnet. Somit kann der Bediener beispielsweise beim Einstecken und/oder Entnehmen des Kupplungsarms aus der Steckaufnahme vor Ort erkennen, ob die Verriegelungseinrichtung funktioniert beziehungsweise welche Funktion gerade aktuell ist.

Die Anzeigemittel der Funktionsanzeigeeinrichtung sind zweckmäßigerweise in einem das Betätigungselement, zweckmäßigerweise auch den Antriebsschalter, aufnehmenden Betätigungsgehäuse angeordnet. Auch an dem vorgenannten Bedienteilträger, der Anhänger-Steckdose, beispielsweise deren Steckdosengehäuse oder Dosendeckel, oder einem Steckdosenträger zum Tragen der Anhänger-Steckdose können die Anzeigemittel angeordnet sein. Ferner kann beispielsweise an einem Formschlusselement oder einem das Formschlusselement haltenden Formschlusselement-Träger der Verriegelungseinrichtung ein Anzeigemittel angeordnet sein, zum Beispiel ein Farbmarkierung mit unterschiedlich farbigen Bereichen, die bei Verriegelung oder Entriegelung des Formschlusselements sichtbar sind. Es ist vorteilhaft, als Anzeigemittel beispielsweise im Außenbereich eine LED-Anzeige vorzusehen.

Zweckmäßigerweise ist der Antriebsschalter inaktivierbar, beispielsweise bei Fahrbetrieb des Kraftfahrzeugs, bei einem aus einem Zündschloss des Kraftfahrzeugs entferntem Schlüssel oder dergleichen. Dazu weist die Anhängekupplung, insbesondere deren Steuerung, einen entsprechenden Schalteingang auf. Ein solcher Schalteingang kann auch zur Aktivierung des Antriebsschalters vorgesehen sein, beispielsweise bei mindestens einer geöffneten Fahrzeugtüre oder Fahrzeugklappe des Kraftfahrzeugs. Nur dann, wenn beispielsweise der Heckdeckel des Kraftfahrzeugs geöffnet ist, ist die Anhängekupplung betätigbar. Auch dies schafft eine zusätzliche Sicherheit.

Vorteilhaft ist vorgesehen, dass die Anhängekupplung eine Steuerung zur Aktivschaltung des Antriebsschalters anhand mindestens einer Auslösebedingung für ein Zeitintervall aufweist, wobei der Verriegelungsantrieb in dem Zeitintervall durch den Antriebsschalter startbar ist.

Ein Grundgedanke ist es dabei, den Verriegelungsantrieb nur innerhalb eines Zeitintervalls startbar zu machen, während außerhalb des Zeitintervalls keine Betätigung des Verriegelungsantriebs möglich ist. Das Konzept sieht vor, dass der Antriebsschalter nur für ein vorbestimmtes Zeitfenster aktivgeschaltet ist und eine Betätigung des Verriegelungsantriebs zulässt. Eine unbeabsichtigte Betätigung des Verriegelungsantriebs oder Entriegelungsantriebs ist nur innerhalb des Zeitintervalls möglich, so dass außerhalb desselben eine mögliche Fehlbedienung ausgeschlossen ist. Zudem ist ein Manipulationsschutz oder auch ein Diebstahlschutz gegeben, wenn das Zeitintervall nicht durch eine äußere Bedingung oder Manipulation im Außenbereich des Kraftfahrzeuges startbar ist.

Eine vorteilhafte Ausgestaltung vor, dass die mindestens eine Auslösebedingung ein von einem Freigabeschalter sendbares Freigabesignal ist. Der Freigabeschalter ist beispielsweise im Innenraum des Kraftfahrzeugs, beispielsweise im Cockpit desselben, im Gepäckabteil, vorzugsweise geschützt durch einen Deckel, oder an anderer Stelle des Kraftfahrzeuges angeordnet. Der Freigabeschalter kann aber auch einen an einem Fahrzeugschlüssel für das Kraftfahrzeug oder an einem am Schlüsselanhängergehäuse angeordneten Sender umfassen und die Anhängekupplung einen zugeordneten Funkempfänger zum Empfang des Freigabesignals. Somit kann beispielsweise durch Betätigung des Freigabeschalters im Schlüssel das Zeitintervall durch den Bediener des Kraftfahrzeuges gegeben werden, worauf dann das Zeitintervall zur Betätigung des Antriebsschalters beginnt. Der Sender ist beispielsweise in einem Fahrzeugschlüsselgehäuse, insbesondere dessen Griff, angeordnet.

Die mindestens eine Auslösebedingung kann auch eine Funktionsstellung eines Motorschalters zum Starten eines Antriebs des Kraftfahrzeugs umfassen. Die Funktionsstellung ist beispielsweise eine Betriebsbereitschaft des Kraftfahrzeuges, zum Beispiel ein Signal "Klemme 15 ein". Das Signal kann beispielsweise das geschaltete Plus am Zündstartschalter sein ("Klemme 15") oder auch die sogenannte Zündschloss-Radiostellung ("Klemme 15r").

Es ist aber auch der gerade umgekehrte Fall denkbar, dass nämlich die mindestens eine Auslösebedingung eine Funktionsstellung "Motor aus", zum Beispiel "Klemme 15", des Motorstartschalters umfasst. Somit ist also eine der Auslösebedingungen jedenfalls so getroffen, dass zum Auslösen des Zeitintervalls der Motor ausgeschaltet wird. Die Auslösebedingung kann beispielsweise auch ein Zustandswechsel "Motor ein - Motor aus" sein, so dass beispielsweise nach Abstellen des Kraftfahrzeuges das Zeitintervall zum Entriegeln des Kupplungsarmes beginnt und der Bediener den Kupplungsarm beispielsweise nach Betätigen des Antriebsschalters und Entriegeln der Verriegelungseinrichtung vom Halter entfernen kann. Das Zeitintervall ist in dieser Situation vorzugsweise so bemessen, dass der Bediener zwar bequem zum Heck des Kraftfahrzeuges gehen und dort den Kupplungsarm entnehmen kann. Dann endet das Zeitintervall jedoch, so dass eine Fehlmanipulation oder gar ein Diebstahl des Kupplungsarmes verhindert wird.

Die mindestens eine Auslösebedingung kann auch eine Bestromung einer Leuchte des Kraftfahrzeugs, insbesondere einer am Heck des Kraftfahrzeugs angeordneten Leuchte, umfassen. Die Heckleuchte ist beispielsweise eine Nebelschlussleuchte, ein Rückfahrscheinwerfer, eine Blinkleuchte des Kraftfahrzeugs oder dergleichen. Wenn die erfindungsgemäße Steuerung auf der Basis des Heckleuchtensignals arbeitet, sind nur kurze Kabelwege erforderlich, was insbesondere beim Nachrüsten der Anhängekupplung vorteilhaft ist. Auch ansonsten sind kurze Leitungswege kostengünstig.

Eine Variante der Erfindung kann vorsehen, dass die Leuchte eine Leuchte des Anhängers ist, deren Bestromung eine Auslösebedingung für die erfindungsgemäße Steuerung bildet. So könnte die Steuerung beispielsweise mit einer Stromversorgungsleitung für mindestens eine dieser anhängerseitigen Leuchten verbunden sein, beispielsweise mit der zur Anhänger-Steckdose führenden Versorgungsleitung. Diese Variante ist aufgrund einer kurzen Leitungsführung vorteilhaft.

Besonders bevorzugt ist jedoch, dass die Steuerung zur Ermittlung einer Bestromung der Leuchte mit einem Bordnetz des Kraftfahrzeugs, zum Beispiel mit einer zur jeweiligen Leuchte führenden Stromversorgungsleitung, verbunden ist. Es ist aber auch möglich, dass die Steuerung mit einem Bus des Bordnetzes verbunden ist, über das die Leuchte aktiviert wird. Das Bordnetz des Kraftfahrzeugs ist von außen nicht manipulierbar, was die Diebstahlsicherheit verbessert. Kontakte der Anhänger-Steckdose sind nämlich prinzipiell von außen her zugänglich und dementsprechend manipulierbar.

Die mindestens eine Auslösebedingung bildet zweckmäßigerweise einen Bestandteil einer Auslösebedingungsgruppe, die die Steuerung zur Aktivschaltung des Antriebsschalters für das Zeitintervall prüft, wobei die Auslösebedingungsgruppe mindestens zwei Auslösebedingungen aufweist, welche die Steuerung für eine Aktivierung des Antriebsschalters prüft. Somit ist eine Aktivierung des Antriebsschalters bei einem Einfachfehler, beispielsweise einem Kurzschluss, einer Störung an einem Schalter, durch eine Manipulation von außen oder dergleichen, unproblematisch, weil mindestens eine zweite Auslösebedingung hinzutreten muss, bevor die Steuerung den Antriebsschalter aktivschaltet beziehungsweise für ein Auslösen des Verriegelungsantriebs freigibt.

Die Auslösebedingungsgruppe umfasst zweckmäßigerweise mindestens zwei der vorgenannten Auslösebedingungen.

Besonders vorteilhafte Varianten von Auslösebedingungsgruppen werden nachfolgend vorgestellt:

Eine besonders bevorzugte Auslösebedingungsgruppe umfasst beispielsweise die beiden folgenden Auslösebedingungen: Motorstartschalter zum Starten eines Antriebs des Kraftfahrzeugs in Funktionsstellung "Motor aus" und/oder "Schlüssel aus einem Zündschloss des Kraftfahrzeugs entfernt". An dieser Bedingung erkennt die Steuerung, dass das Kraftfahrzeug außer Betrieb ist. Eine andere Bedingung wäre, dass der Motor des Kraftfahrzeuges nicht läuft. Allerdings ist das Signal "Klemme 15" im Bereich der Anhänger-Steckdose beziehungsweise der Anhängekupplung in der Regel ohnehin vorhanden, so dass die Stellung des Motorstartschalters eine bevorzugte, einfach handhabbare Bedingung ist. Die weitere Bedingung der Auslösebedingungsgruppe ist dann:
- mindesten eine, vorzugsweise mindestens zwei Blinkleuchten des Kraftfahrzeugs eingeschaltet beziehungsweise mit wechselnder Bestromung.

Nach dem Abstellen des Kraftfahrzeuges ist das Signal "Klemme 15" in der Regel "AUS" beziehungsweise wird der Zündschlüssel aus dem Zündschloss entfernt.

In einem nächsten Schritt wird das Kraftfahrzeug verriegelt oder entriegelt, wobei bei aktuellen Kraftfahrzeugen die Blinker des Kraftfahrzeuges zumindest einmal aufleuchten. Die Bedienung erfolgt beispielsweise über die Funkfernbedienung, deren Sender zweckmäßigerweise in einem Gehäuse des Fahrzeugschlüssels angeordnet ist. Die Sicherheit bei diesem Konzept ist hoch, da zum einen die Startbedingung "Klemme 15 aus" und zum anderen mindestens ein Heckleuchtensignal, vorzugsweise zwei Heckleuchtensignale (der beiden heckseitigen Blinkleuchten), von der erfindungsgemäßen Steuerung ausgewertet werden. Die Signale der heckseitigen Blinkerleuchten sind im Heckbereich mit kurzen Leitungswegen für die erfindungsgemäße. Steuerung verfügbar. Eine Auslösung während der Fahrt des Kraftfahrzeuges ist nicht möglich. Eine Sabotage ist kaum möglich. Zudem sind die Kosten dieser Variante gering. Die Bedienung ist komfortabel.

Es versteht sich, dass das Sicherheitskonzept der Auslösebedingungsgruppe auch mit anderen kombinierten Auslösebedingungen realisierbar ist, beispielsweise:
- Nebenschlussleuchte und/oder Rückfahrscheinwerfer eingeschaltet und
- Motorschalter zum Starten eines Antriebs des Kraftfahrzeugs in Betriebsbereitschaft, beispielsweise Signal "Klemme 15 ein", "Schlüssel ins Zündschloss gesteckt" oder dergleichen.

Es versteht sich, dass zu den beiden vorgenannten Auslösebedingungsgruppen auch weitere Auslösebedingungen hinzutreten können, was die Sicherheit des erfindungsgemäßen Konzeptes erhöht.

Nachfolgend werden weitere Auslösebedingungen erörtert, die vorteilhaft sind.

Mindestens eine Auslösebedingung kann beispielsweise auch umfassen, dass der Antriebsschalter vor Beginn der Aktivierung unbetätigt ist. Wenn also ein Bediener beispielsweise den Antriebsschalter bereits drückt, bevor das Zeitintervall an sich beginnen würde, aktiviert die Steuerung den Antriebsschalter nicht. Bei gedrücktem Antriebsschalter erfolgt also keine Aktivierung.

Eine weitere Sicherheitsmaßnahme ist es, wenn die Steuerung ein Starten des Antriebsmotors des Verriegelungsantriebs nur dann zulässt, wenn der Antriebsschalter nach Beginn des Zeitintervalls von einer unbetätigten Stellung in eine Betätigungsstellung betätigt wird. Die Steuerung prüft also eine Signalflanke "Aus-Ein".

Der Antriebsmotor ist vorteilhaft nur während einer Betätigung des Antriebsschalters in Betrieb. Wenn der Bediener den Antriebsschalter loslässt, schaltet auch der Antriebsmotor des Verriegelungsantriebs ab. Dadurch wird sichergestellt, dass der Antriebsmotor nicht ohne Bedieneraufsicht läuft. Es versteht sich, dass bei einer anderen Ausgestaltung der Erfindung der Antriebsschalter nur einen Startimpuls für den Antriebsmotor gibt und dieser dann so lange läuft, bis eine Entriegelung oder Verriegelung der Verriegelungseinrichtung erreicht ist.

Die Steuerung kann so ausgestaltet sein, dass sie das Zeitintervall während einer Bestromung des Antriebsmotors und/oder während einer Betätigung des Antriebsschalters verlängert. Somit wird verhindert, dass der Antriebsmotor abschaltet, bevor eine Verriegelungsstellung oder Entriegelungsstellung erreicht ist. Andererseits braucht das Zeitintervall nicht unnötig lange zu sein, da lediglich der Start des Antriebsmotors innerhalb des Zeitintervalls erfolgen muss.

Die Steuerung umfasst zweckmäßigerweise mindestens einen Signalausgang zur Ansteuerung einer optischen und/oder akustischen Funktionsanzeigeeinrichtung des Kraftfahrzeugs oder der Anhängekupplung. Die Funktionsanzeigeeinrichtung kann aber auch ein integraler Bestandteil der Steuerung sein, beispielsweise auf einer Steuerungsplatine oder im Gehäuse der Steuerung angeordnet sein. Die Funktionsanzeigeeinrichtung ist zweckmäßigerweise im Bereich des Halters angeordnet, das heißt im Bedienbereich zum Anbringen oder Entfernen des Kupplungsarms am beziehungsweise vom Halter. Ferner kann die Funktionsanzeigeeinrichtung auch in einem Display des Kraftfahrzeugs vorgesehen sein, beispielsweise im Cockpit desselben.

Die Steuerung signalisiert beispielsweise eine Aktivierung des Antriebsschalters über die mindestens eine Funktionsanzeigeeinrichtung. Ferner kann die Steuerung beispielsweise auch eine Störung der Verriegelungseinrichtung oder eine Fehlbedienung mittels der Funktionsanzeigeeinrichtung anzeigen, beispielsweise wenn der Antriebsschalter bereits vor Beginn des Zeitintervalls gedrückt war.

Vorteilhaft ist es, wenn die Anhängekupplung eine Steuerung zum erneuten Anschalten des Verriegelungsantriebs in Richtung der Verriegelungsstellung für ein Spannen des Kupplungsarms am Halter im Rahmen eines Zyklus' und/oder bei einer Lösebedingung aufweist, solange die Verriegelungseinrichtung zur Einnahme der Verriegelungsstellung angesteuert ist. Die Lösebedingung umfasst zweckmäßigerweise ein Lösen des mindestens einen Formschlusselements und der Formschlusskontur um ein vorbestimmtes Längenmaß.

Nachfolgend werden Ausführungsbeispiele der Erfindung anhand der Zeichnung erläutert. Es zeigen:

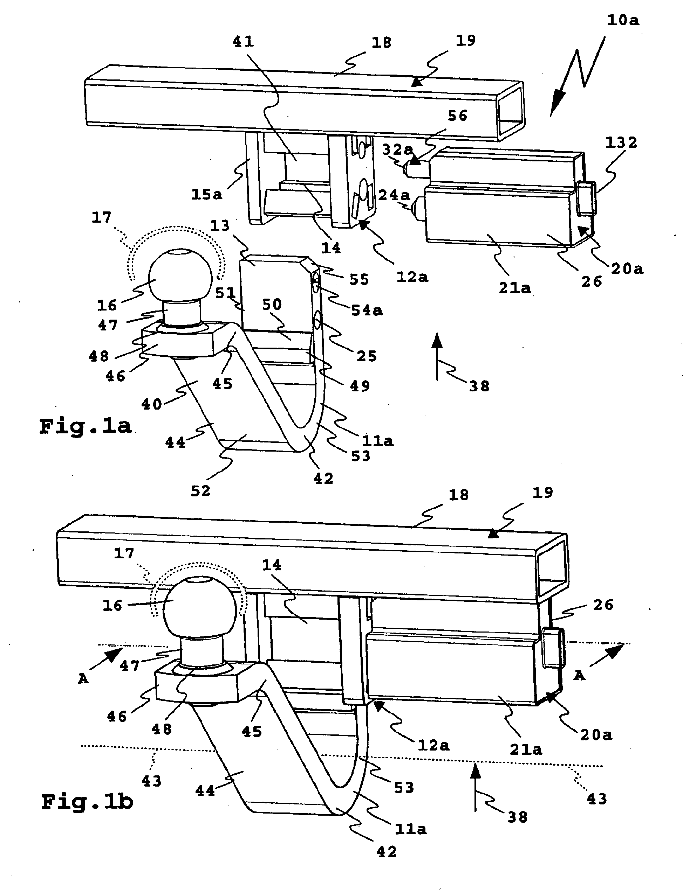

- Figur 1a: eine Explosionsdarstellung einer
- Figur 1b: im zusammengebauten Zustand schräg von vorn dargestellten ersten Ausführungsform einer erfindungsgemäßen Anhängkupplung,

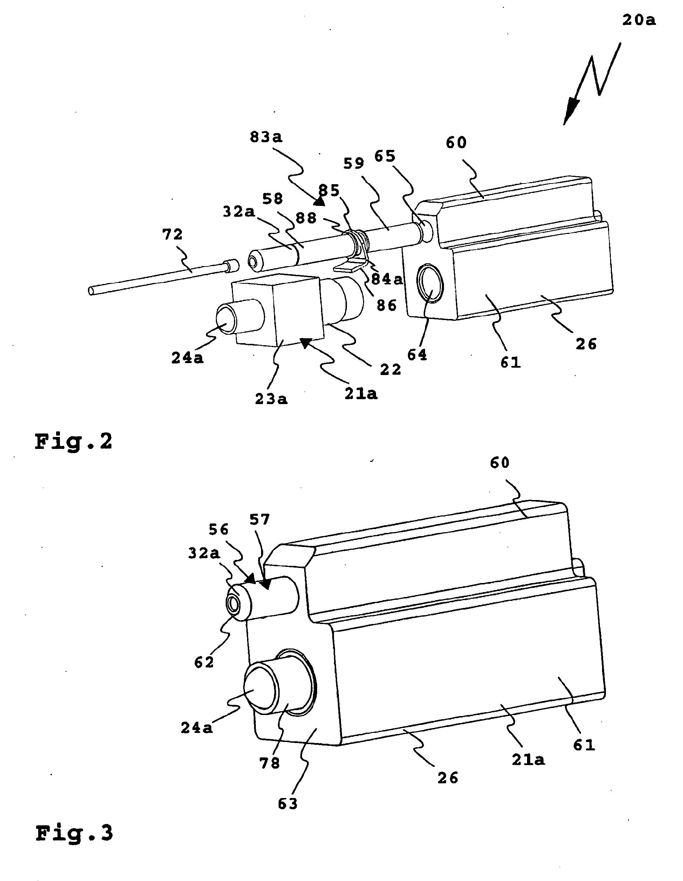

- Figur 2: eine Explosionsdarstellung einer in
- Figur 3: zusammengebaut dargestellten Verriegelungseinrichtung der Anhängekupplung gemäß Figuren 1a, 1b,

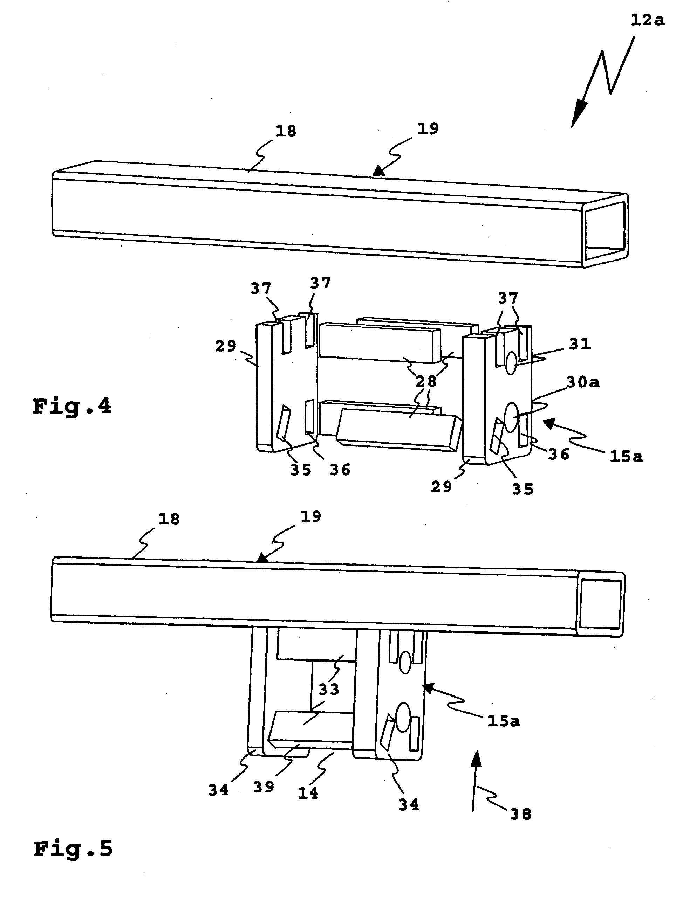

- Figur 4: eine Explosionsdarstellung eines Haltergehäuses der Anhängekupplung gemäß Figur 1a, das in
- Figur 5: zusammengebaut dargestellt ist,
- Figur 6a: eine Schnittdarstellung der Anhängekupplung gemäß Figur 1b, etwa entlang einer Schnittlinie A-A in Figur 1b beim Einstecken eines Kupplungsarms in das Haltergehäuse der Anhängekupplung,
- Figur 6b: die Ansicht gemäß Figur 6a, wobei ein als Sicherungskörper ausgestalteter Rastkörper in eine Rastausnehmung am Kupplungsarm eingerastet ist,
- Figur 6c: eine teilweise und
- Figur 6d: eine vollständig durchgeführte motorische Verriegelung des Kupplungsarms,
- Fig. 6e,: 6f die Ansicht gemäß Figur 6a mit teilweise und vollständig entriegelter Verriegelungseinrichtung,
- Figur 6g: die Verriegelungseinrichtung gemäß Figur 6f, wobei der Rastkörper oder Sperrkörper, der in Figur 6b in den Kupplungsarm einrastet, für eine Wiederverrastung freigegeben ist,
- Figur 7: eine perspektivische Schrägansicht der Anhängekupplung gemäß Fig. 1b, jedoch mit einer zusätzlichen Anhänger-Steckdose mit geöffnetem Deckel, wobei die Steckdose bei einem Vergrößerungsausschnitt B mit ihrem Deckel verschlossen ist,
- Figur 8: eine Variante der Anhängekupplung gemäß Figur 1a mit einem zusätzlichen Formschlusselement-Sensor,
- Fig. 9a-9c: eine Vertikal-Querschnittsansicht der Anhängekupplung gemäß Figur 8, wobei ein Verriegelungsvorgang des Kupplungsarms am Halter gezeigt ist,
- Fig. 9d-9f: Ansichten entsprechend Figuren 9a-9c zur Veranschaulichung eines Entriegelungsvorgangs,

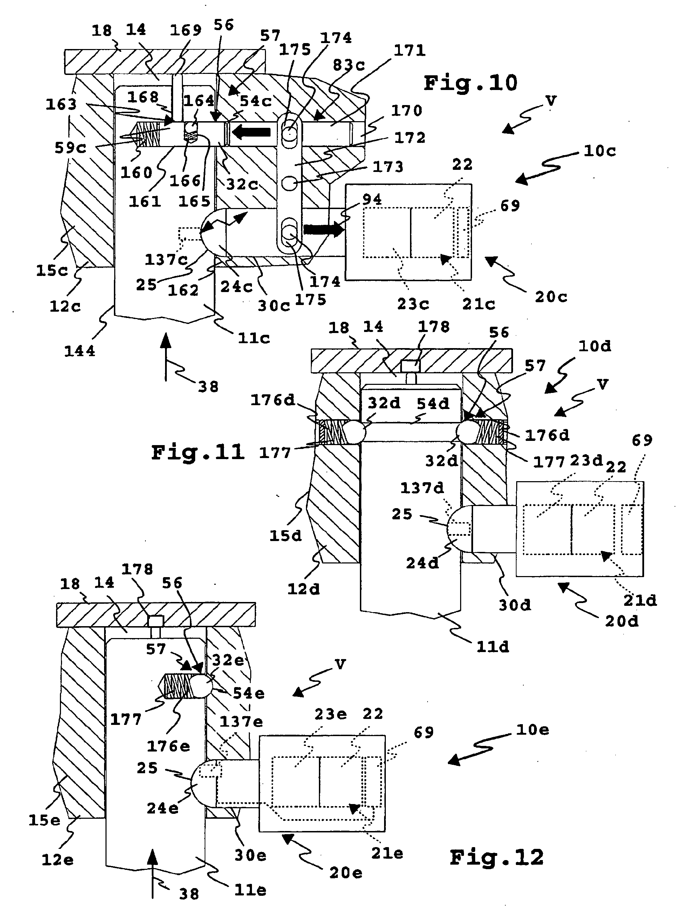

- Figur 10: eine teilweise Querschnittsansicht eines weiteren Ausführungsbeispiels einer erfindungsgemäßen Anhängekupplung mit einem im Kupplungsarm beweglich gelagerten Sicherungsbolzen zur Verrastung mit dem Halter,
- Figur 11: eine Querschnittsansicht eines weiteren Ausführungsbeispiels mit federbelasteten Rastmitteln zum Halten des Kupplungsarms für eine Verriegelung durch eine motorische Verriegelungseinrichtung mit am Halter beweglich gelagerten Rastkörpern,
- Figur 12: eine teilweise Querschnittsansicht eines weiteren Ausführungsbeispiels der Erfindung mit einem am Kupplungsarm beweglich gelagerten Rastkörper zum Verrasten und Halten an einem Halter,

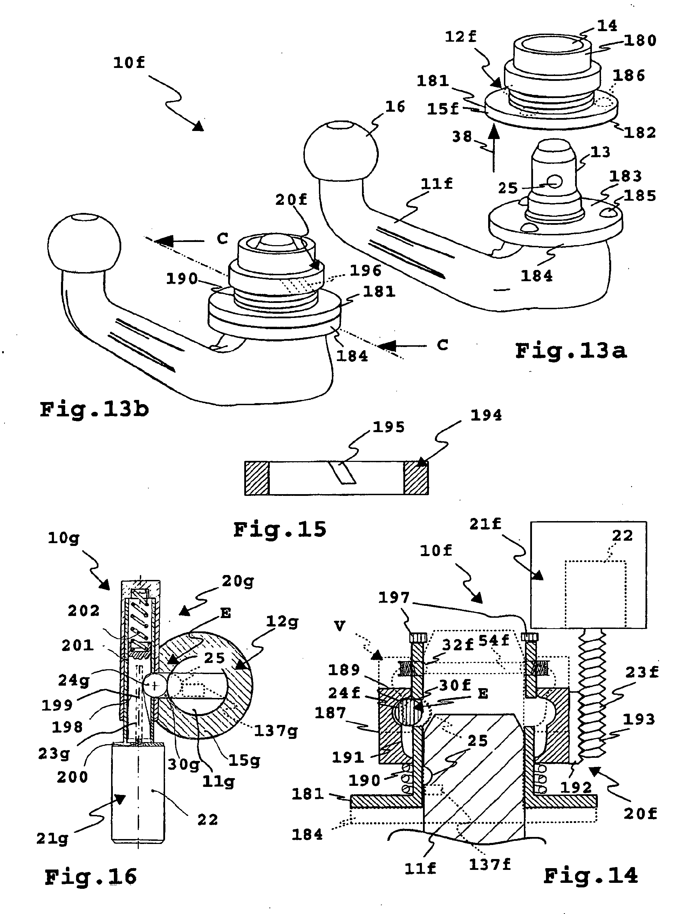

- Figur 13a: ein weiteres Ausführungsbeispiel einer erfindungsgemäßen, sehr kompakten Anhängekupplung, wobei ein Kupplungsarm vom Halter entfernt ist,
- Figur 13b: die Anhängekupplung gemäß Figur 13a mit am Halter angeordnetem Kupplungsarm,
- Figur 14: eine teilweise Querschnittsansicht der Anhängekupplung gemäß Figur 13b, etwa entlang einer Schnittlinie C-C,
- Figur 15: einen Betätigungsring zur alternativen Verwendung an der Anhängekupplung gemäß Figur 13a, 13b,
- Figur 16: ein weiteres Verriegelungsprinzip einer erfindungsgemäßen Anhängekupplung mit einem KeilschrägenVerschiebekörper,

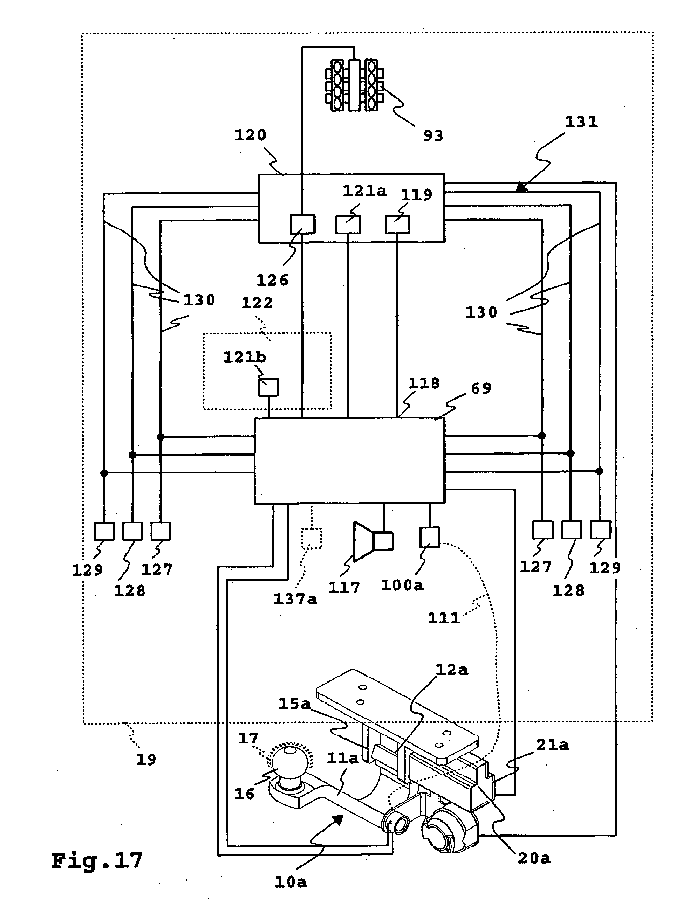

- Figur 17: ein schematisches Schaltbild der Anhängekupplung gemäß Figuren 1a, 1b sowie deren Steuerung und eines Bordnetzes des Zugfahrzeugs,

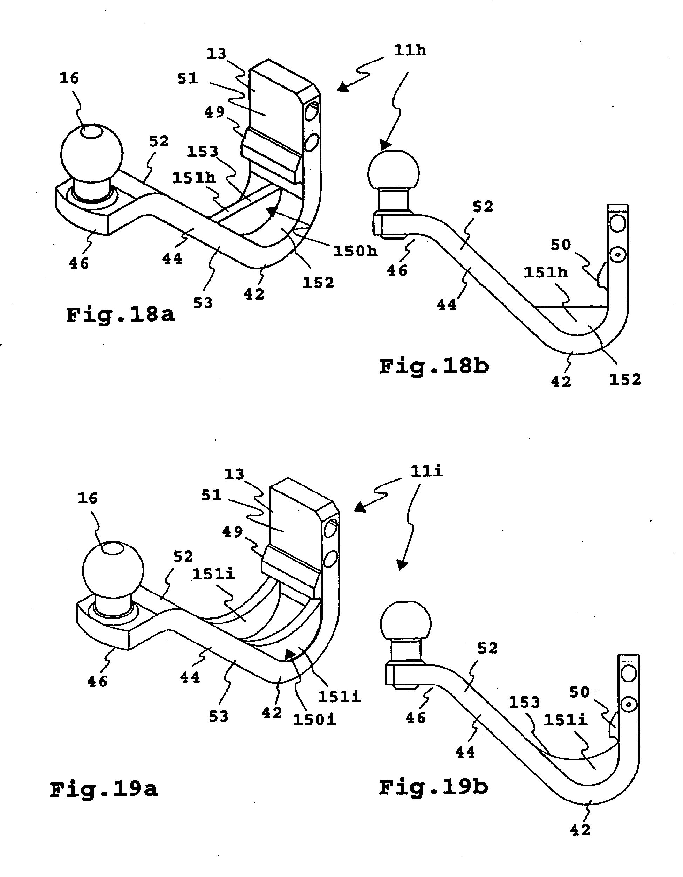

- Fig. 18a,18b: einen mit einer innenliegenden Verstärkungsrippe verstärkten Kupplungsarm,
- Fig. 19a,19b: einen mit zwei innenliegenden Verstärkungsrippen verstärkten Kupplungsarm,

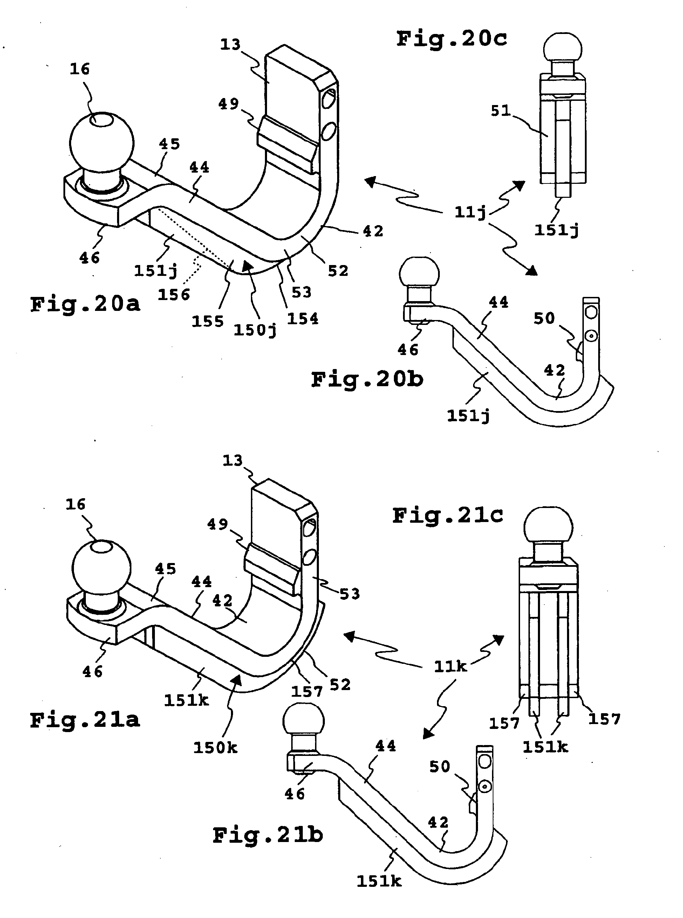

- Fig. 20a-20c: einen mit einer außenliegenden Verstärkungsrippe verstärkten Kupplungsarm,
- Fig. 21a-21c: einen mit zwei außenliegenden Verstärkungsrippen verstärkten Kupplungsarm,

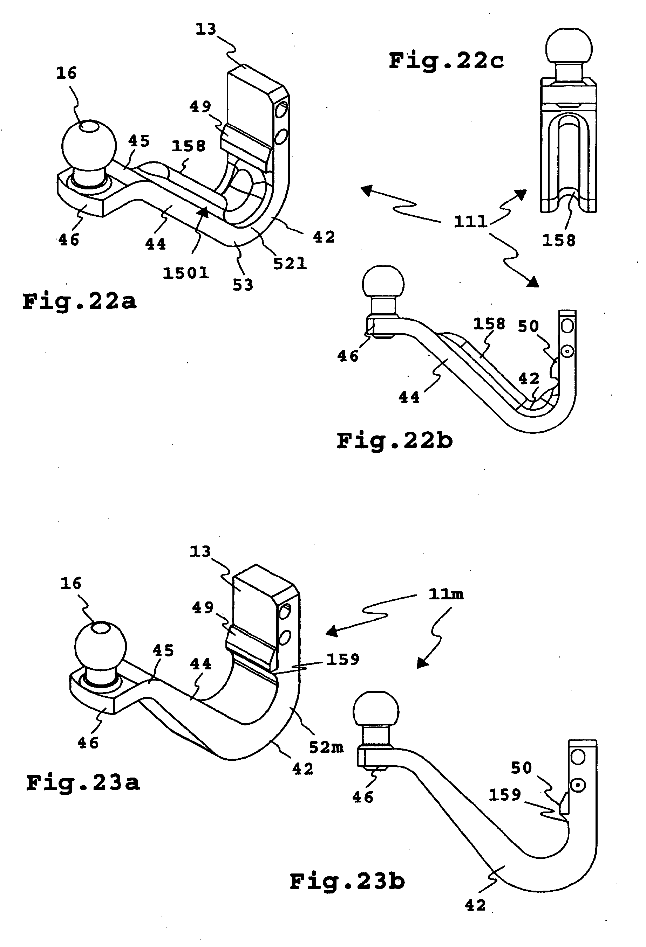

- Fig. 22a-22c: einen mit einer Auswölbung verstärkten Kupplungsarm, und
- Fig. 23a,23b: einen Kupplungsarm mit entlang seiner Längserstreckungsrichtung variiertem Querschnitt.

Bei der nachfolgenden Beschreibung sind ähnliche oder gleichwirkende Komponenten mit denselben Bezugsziffern versehen, wobei zur Verdeutlichung von Unterschieden Kleinbuchstaben a, b etc. verwendet sind.

Bei Anhängekupplungen 10a-10g ist jeweils ein Kupplungsarm 11a-11g an einem Halter 12a-12g lösbar befestigbar. Die Kupplungsarme 11a-11g sind mit ihren Steckenden 13 in Steckaufnahmen 14 von Haltergehäusen 15a-15g der Halter 12a-12g einsteckbar. An dem dem Steckende 13 entgegengesetzten Längsende der Kupplungsarme 11a-11g ist ein Kugelkopf 16 zum Anhängen eines schematisch dargestellten Anhängers 17 angeordnet. Die Halter 12a-12g sind an einem Querträger 18 eines Kraftfahrzeuges 19 befestigbar. Beispielsweise sind die Halter 12a-12g an den Querträger 18 angeschraubt, angeschweißt oder dergleichen. Es versteht sich, dass zum Halten der Halter 12a-12g auch sonstige Trägeranordnungen oder Bereiche des Kraftfahrzeuges 19 vorgesehen sein könnten, beispielsweise Karosserieteile oder dergleichen.

Die Kupplungsarme 11a-11g sind an Haltern 12a-12g mittels Verriegelungseinrichtungen 20a-20g motorisch verriegelbar. Dadurch ist die Handhabung der Anhängekupplungen 10a-10g besonders einfach. Der Bediener benötigt keinerlei Handbedienelemente, beispielsweise Handräder oder dergleichen, um die Verriegelung der Anhängekupplungen 10a-10g zu betätigen. Handbedienelemente sind bei manuellen Anhängekupplungen mit abnehmbarem Kupplungsarm in der Regel im Außenbereich angeordnet, wo sie beim Fahrbetrieb verschmutzen.

Verriegelungsantriebe 21a-21g mit jeweils einem Verriegelungsmotor 22 und einem Spanngetriebe 23a-23g sind zur Betätigung von Formschlusselementen 24a-24g zwischen einer den Kupplungsarm 11a-11g am Halter 12a-12g verriegelnden Verriegelungsstellung V und einer den Kupplungsarm 11a-11g zum Entnehmen vom Halter 12a-12g freigebenden Entriegelungsstellung E vorgesehen.

Die Formschlusselemente 24a, 24b, 24f, 24g sind beispielsweise Kugeln, während die Formschlusselemente 24c, 24d, 24e Sperrbolzen sind, deren freies, zur Verriegelung vorgesehenes Ende zweckmäßigerweise kugelig ist.

Es sind als Formschlusselemente aber auch Sperrbolzen oder Verriegelungsbolzen möglich, deren freie Enden rund, flach gekrümmt, plan oder dergleichen sind. Vorzugsweise zwischen ist einer Stirnseite eines jeweiligen Bolzens und dessen Außenumfang eine Einführschräge vorgesehen. Es versteht sich, dass als Formschlusselemente auch Wälzkörper, zum Beispiel Rollen oder dergleichen, ohne weiteres möglich sind.

Die Verriegelungsmotoren 22 sind vorliegend Elektromotoren, wobei ohne weiteres auch pneumatische Antriebe, hydraulische Antriebe, elektro-pneumatische Hybridantriebe oder dergleichen möglich sind.

Die Spanngetriebe 23a-23g sind zweckmäßigerweise selbsthemmend, so dass die Anhängekupplungen 10a-10g in der Entriegelungsstellung E oder der Verriegelungsstellung V bleiben, auch wenn der Verriegelungsmotor 22 unbetätigt ist.

Vorzugsweise sind die Spanngetriebe 23a-23g zu einer Kraftverstärkung des Verriegelungsmotors 22 vorgesehen. So sind beispielsweise die Spanngetriebe 23a-23e Getriebe, die eine Drehzahl des Verriegelungsmotors 22 herabsetzen.

Das Spanngetriebe 23a umfasst z.B. ein Planetengetriebe. Das Spanngetriebe 23f umfasst ein Schneckengetriebe, das Spanngetriebe 23g ein Spindel-Mutter-Getriebe. Die Spindel des Spanngetriebes 23a hat ebenso wie die schematisch dargestellte Schnecke des Spanngetriebes 23f zweckmäßigerweise eine zur Selbsthemmung geeignete Steigung.

Hier sei erwähnt, dass bei jedem Spanngetriebe einer erfindungsgemäßen Anhängekupplung eine Selbsthemmung vorteilhaft ist. Ferner kann ein Spanngetriebe einer erfindungsgemäßen Anhängekupplung andere Getriebearten umfassen, z.B. ein Zahnradgetriebe, Spindelgetriebe, ein Schneckengetriebe, ein Keilgetriebe, ein Planetengetriebe, auch in beliebiger Kombination mindestens zweier gleicher oder unterschiedlicher Getriebe miteinander.

Die Formschlusselemente 24a-24g greifen in Formschlusskonturen 25 in den Kupplungsarmen 11a-11g ein. Die Formschlusskonturen 25 sind an dem Steckende 13 des Kupplungsarms 11a-11g angeordnet.

Hier sei erwähnt, dass ein Formschlusselement einer erfindungsgemäßen Anhängekupplung auch eine Formschlussaufnahme umfassen kann, die mit einem ortfesten, eine Formschlusskontur darstellenden Formschlussvorsprung in Formschluss bringbar ist. Ferner kann das mindestens eine, durch die Verriegelungseinrichtung betätigbare Formschlusselement bei einer Anhängekupplung auch am Kupplungsarm und die Formschlusskontur ortsfest am Halter sein.

Beim Halter 12a ist ein modulares Konzept realisiert. Ein Antriebsgehäuse 26 der Verriegelungseinrichtung 20a enthält den Verriegelungsantrieb 21a einschließlich des Verriegelungsmotors 22 und des Spanngetriebes 23a. Somit ist die Verriegelungseinrichtung 20a als ein Verriegelungsmodul oder Antriebsmodul ausgestaltet. Das Verriegelungsmodul kann vormontiert an das Haltergehäuse 15a angesetzt werden, was die Montage vereinfacht. Beispielsweise sind das Antriebsgehäuse 26 und das Haltergehäuse 15a miteinander verschraubt (nicht dargestellt), aneinander angeklebt oder dergleichen. Die Verbindung zwischen dem Antriebsgehäuse 26 und dem Haltergehäuse 15a kann aber auch beispielsweise durch den Querträger 18 realisiert sein, an dem beide Komponenten befestigt sind, beispielsweise angeschraubt, angeschweißt oder dergleichen.

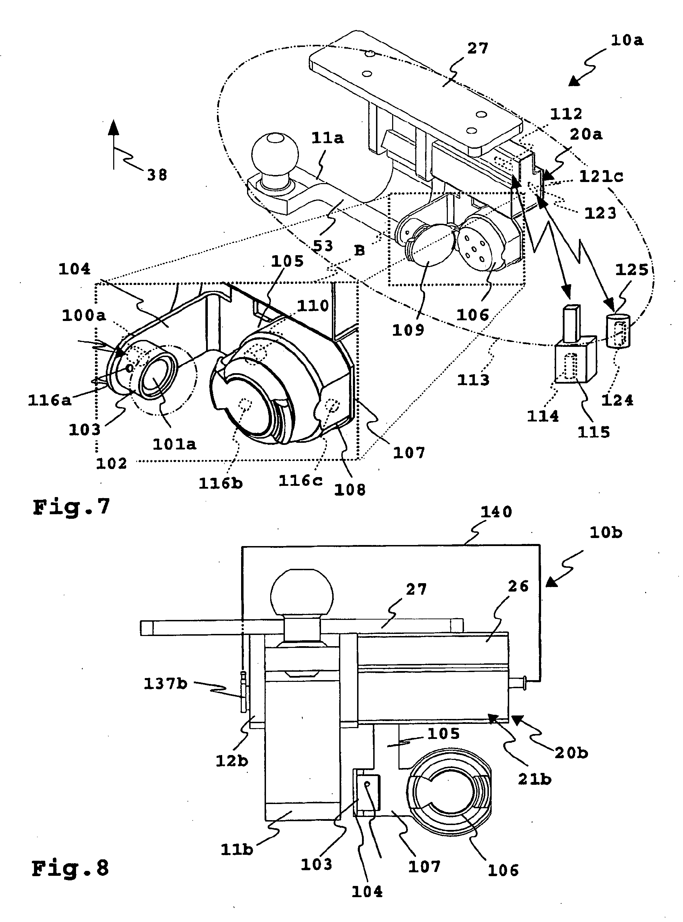

Es kann auch ein gemeinsamer Träger für das Antriebsgehäuse 26 und das Haltergehäuse 15a vorgesehen sein, beispielsweise eine Trägerplatte 27 (Figur 8), an der die beiden Komponenten angeordnet sind. Es ist beispielsweise möglich, das Haltergehäuse 15a an die Trägerplatte 27 anzuschweißen und das Antriebsgehäuse 26 sodann seitlich an dem Haltergehäuse 15a zu befestigen, beispielsweise anzuschrauben.

Die mit einem gemeinsamen Träger, zum Beispiel der Trägerplatte 27, miteinander verbundenen Bestandteile des Halters 12a (Antriebsgehäuse 26 und Haltergehäuse 15a) können als kompakte Baueinheit beispielsweise am Querträger 18 befestigt werden, zum Beispiel angeschraubt werden. Somit bildet der Halter 12a bei dieser Ausgestaltung ein kompaktes Haltermodul, das als Ganzes montierbar ist.

Bei der Herstellung des Haltergehäuses 15a ist ein innovatives Konzept realisiert, das die Fertigungskosten bei hoher mechanischer Belastbarkeit des Haltergehäuses 15a niedrig hält.

Das Haltergehäuse 15a ist aus Plattenstücken 28, 29 gefertigt, die aus Flachmaterial ausgeschnitten sind, beispielsweise ausgestanzt, mittels Laser, Plasma oder Wasserstrahl, der zweckmäßigerweise ein Abrasivmaterial (zum Beispiel Sand) enthält, durch Brennschneiden oder dergleichen.

Die Plattenstücke 28 haben ein und dieselbe geometrische Gestalt, so dass ein Gleichteilprinzip realisiert ist. Die Plattenstücke 29 sind ebenfalls im Wesentlichen gleich und haben dieselbe Geometrie, abgesehen von einem Führungskanal 30a für das Formschlusselement 24a und einem oberen Führungskanal 31 für einen Rastkörper 32a der Verriegelungseinrichtung 20a.

Die Plattenstücke 28 bilden Querstreben 33, die sich zwischen von den Plattenstücken 29 gebildeten Seitenwänden 34a, 34b erstrecken, von denen wie gesagt die dem Antriebsgehäuse 26 zugewandte Seitenwand 34 die Führungskanäle 30a, 31 aufweist.

Die Querstreben 33 sind in Aufnahmen 35, 36 und 37 an den Seitenwänden 34 aufgenommen. Die Aufnahmen 35-37 sind vorliegend als Durchgangsöffnungen ausgestaltet, das heißt, sie sind beim Ausstanzen oder sonstigen Ausschneiden der Plattenstücke 28, 29 zweckmäßigerweise in einem Arbeitsgang mithergestellt. Dadurch gestaltet sich die Herstellung der Plattenstücke 28 und 29 besonders einfach. Zudem durchdringen die Querstreben 33 die Aufnahmen 35-37 im Wesentlichen vollständig, so dass ein sicherer Halt zwischen den Querstreben 33 und den Seitenwänden 34 gegeben ist. Die oberen Aufnahmen 37 sind nach oben hin offen.

Die in den Aufnahmen 35-37 steckenden Querstreben 33 werden nach einem einfachen Steckvorgang oder Einpressvorgang, der ohne weiteres auch maschinell realisierbar ist, mit den Seitenwänden 34 fest verbunden, beispielsweise verschweißt, verklebt oder dergleichen.

Die Querstreben 33 und die Seitenwände 34 verlaufen winkelig, vorliegend rechtwinkelig zueinander, so dass die Steckaufnahme 24 eine polygonale, vorliegend rechteckige Innenquerschnittskontur quer zu einer Einsteckrichtung 38 des Kupplungsarms 11a in die Steckaufnahme 14 aufweist.

Die beiden unteren Aufnahmen 35 sind bezüglich der Einsteckrichtung 38 schräggeneigt. Dadurch hat auch die in die Aufnahmen 35 eingesteckte Querstrebe 33 eine Schrägneigung.

Die in die Aufnahmen 35 eingesteckte Querstrebe 33 bildet einen Steckanschlag 39 für einen Gegenanschlag am Kupplungsarm. Zudem erleichtert die Schrägneigung der unteren Querstrebe 33 ein Einstecken des Kupplungsarms 11. Somit bildet der schräggeneigte Steckanschlag 39 zugleich eine Einführschräge.

Die Querstreben 33 sind bezüglich der Einsteckrichtung 38 zueinander beabstandet. Dadurch wird eine Art Käfigstruktur gebildet. Mithin ist das Haltergehäuse 15a ein Halterkäfig. Das Haltergehäuse 15a ist leicht und materialsparend aufgebaut.

Die die Steckaufnahme 14 definierenden Innenseiten der Seitenwände 34 sowie der Querstreben 33 sind Flachseiten, an denen das Steckende 13 des Kupplungsarms 11a flächig anliegt. Durch die zusätzliche Verriegelung und Verspannung mittels der Verriegelungseinrichtung 20a in Verbindung mit der großflächigen Anlage ist der Kupplungsarm 11a in der Steckaufnahme 14 spielfrei aufgenommen. Zudem bildet die polygonale Innenquerschnittskontur mit der korrespondierenden Außenquerschnittskontur der Steckaufnahme 14 in Verbindung mit der korrespondierenden, ebenfalls polygonalen Außenquerschnittskontur des Steckendes 13 des Kupplungsarms 11a eine optimale Verdrehsicherung.

Auch der Kupplungsarm 11a ist mit geringem, jedoch effizient genutztem Materialeinsatz hergestellt.

Anders als übliche Kupplungsarme weist der Kupplungsarm 11a eine Flachgestalt auf und ist vorzugsweise aus demselben Flachmaterial gefertigt wie die Plattenstücke 28, 29 des Haltergehäuses 15a. Der Kupplungsarm 11a hat zwischen seinen beiden Längsenden, das heißt über seine gesamte Länge, einen polygonalen Außenquerschnitt 40, der vorliegend flach-rechteckig ist. Insbesondere hat das Steckende 13 diese polygonale Außenquerschnittskontur bzw. den Außenquerschnitt 40, der mit der entsprechenden Innenquerschnittskontur 41 der Steckaufnahme 14 korrespondiert.

Durch die polygonalen Querschnittskonturen ist der Kupplungsarm 11a verdrehsicher in der Steckaufnahme 14 aufgenommen.

Die Steckaufnahme 14 ist im am Kraftfahrzeug 19 montierten Zustand nach unten offen. Mithin verläuft also die Einsteckrichtung 38 vertikal. Dementsprechend verläuft auch das Steckende 13 vertikal, wenn es in die Steckaufnahme 14 eingesteckt ist.

Unterhalb des geradlinig verlaufenden Steckendes 13 des Kupplungsarms 11a erstreckt sich ein Krümmungsabschnitt 42, der im am Kraftfahrzeug 19 montierten Zustand des Kupplungsarms 11a um eine Unterkante eines Stoßfängers 43 des Kraftfahrzeuges 19 herum verläuft.

An den Krümmungsabschnitt 42, der eine erste Krümmung des Kupplungsarms 11a darstellt und beim Ausführungsbeispiel einen Winkel von etwa 135° aufweist (größere oder kleinere Winkel sind bei anderen geometrischen Anforderungen des Kraftfahrzeugs auch möglich), schließt sich ein im Wesentlichen geradliniger, vorliegend sogar exakt geradliniger Armabschnitt 44 des Kupplungsarms 11a an. Der Armabschnitt 44 verläuft beispielsweise mit einer Schrägneigung von etwa 45° zur Horizontalen, wobei auch hier größere oder kleinere Winkel bei anderen geometrischen Anforderungen des Kraftfahrzeugs auch möglich sind. Der Armabschnitt 44 erstreckt sich zwischen dem unteren Krümmungsabschnitt 42 sowie einem oberen Krümmungsabschnitt 45. Der Krümmungsabschnitt 45 hat eine Krümmung von etwa 45°. Der Krümmungsabschnitt 45 ist zwischen dem geradlinigen Armabschnitt 44 sowie einem Kugelkopfende 46 angeordnet, an dem der Kugelkopf 16 angeordnet ist.

Das Kugelkopfende 46 bildet ein dem Steckende 13 entgegengesetztes Längsende des Kupplungsarms 11a. Das Kugelkopfende 46 verläuft bei Gebrauch des Kupplungsarms 11a im Wesentlichen horizontal. Das Kugelkopfende 46 und das Steckende 13 sind zueinander etwa rechtwinkelig.

Der Kugelkopf 16 ist auf einem Kugelkopfträger 47 angeordnet. Der Kugelkopfträger 47 hat eine im Wesentlichen zylindrische Gestalt. Der Kugelkopfträger 47 durchdringt eine Aufnahme am Kugelkopfende 46. Der Kugelkopfträger 47 ist mit dem Kugelkopfende 46 beispielsweise verschraubt, verschweißt oder dergleichen fest verbunden. Vor einen Außenumfang des Kugelkopfträgers 47 steht ein Stützflansch 48 vor, mit dem sich der Kugelkopfträger 47 auf der Oberseite des Kugelkopfendes 46 abstützt.

An einem unteren Endbereich des Steckendes 13 ist ein Steckanschlagkörper 49 angeordnet, der am korrespondierenden Steckanschlag 39 des Haltergehäuses 15a beim Einstecken des Kupplungsarms 11a in die Steckaufnahme 14 anschlägt. Der Steckanschlagkörper 49 hat eine zum freien Ende des Steckendes 13 hin schräg verlaufende Keilschräge 50 zum Verkeilen in der Steckaufnahme 14.

Der Steckanschlagkörper 49 ist auf einer Querbreitseite 51 eines Armkörpers 52 des Kupplungsarms 11a angeordnet. Die Formschlusskontur 25 hingegen ist an einer Querschmalseite 53 des Armkörpers 52 angeordnet. Neben der Formschlusskontur 25, die als Aufnahme ausgestaltet ist, ist eine ebenfalls als Aufnahme ausgestaltete Rastkontur 54a für den Rastkörper 32a angeordnet.

Neben der Rastkontur 54a verläuft eine Verdrängerschräge 55 für den Rastkörper 32a. Der Rastkörper 32a gleitet an der Verdrängerschräge 55 beim Einstecken des Steckendes 13 in die Steckaufnahme 14 entlang bis zur Querschmalseite 53, um anschließend in die Rastkontur 54a einzurasten.

Die Querschmalseiten 53 bilden bei Gebrauch des Kupplungsarms 11a vertikale Seiten beziehungsweise zur Fahrzeughochachse parallel verlaufende Seiten, während die Querbreitseite 51 sowie eine entgegengesetzt am Armkörper 52 angeordnete weitere Querbreitseite parallel zur Fahrzeug-Querrichtung des Kraftfahrzeugs 19 verlaufen. Somit hat der Kupplungsarm 11a insbesondere in Fahrzeug-Querrichtung eine hohe mechanische Belastbarkeit. Zur Erhöhung der Vertikalbelastbarkeit und/oder der Längsbelastbarkeit und/oder Horizontalbelastbarkeit sind jedoch die nachfolgenden Maßnahmen vorteilhaft:

Der Armkörper 52 ist aus einem durchgehenden Flachmaterialstück gefertigt, in das die Krümmungsabschnitte 42 und 45 beispielsweise eingepresst sind.

Bei einem Kupplungsarm 11h ist der Armkörper 52 mit einer Verstärkungsstruktur 150h versehen, so dass seine Belastungsfähigkeit, insbesondere seine Vertikal- und Horizontal-Belastungsfähigkeit, zunimmt. Auch in horizontaler Richtung beziehungsweise Fahrzeug-Querrichtung ist der Kupplungsarm 11h höher belastbar. Die Verstärkungsstruktur 150h umfasst eine Verstärkungsrippe 151h, die in einem Innenraum 152 des unteren Krümmungsabschnitts 42 angeordnet ist. Die Verstärkungsrippe 151h ist als ein Steg ausgestaltet, der etwa in der Quermitte der oberen Querbreitseite 51 angeordnet ist. Eine Oberseite 153 des Stegs beziehungsweise der Verstärkungsrippe 151h hat einen geraden Verlauf, der bei Gebrauch des Kupplungsarms 11h im Wesentlichen horizontal ist. Mithin erstreckt sich die Verstärkungsrippe 151h im vollen Innenumfang des unteren Krümmungsabschnitts 42 und noch ein Stück weit nach oben entlang des geradlinigen Armabschnitts 44. Die Verstärkungsrippe 151h ist beispielsweise etwa 3 cm hoch und 1 cm breit. Beispielsweise ist die Verstärkungsrippe 151h in den Innenraum 152 eingeschweißt. Die Verstärkungsrippe 151h wird z.B. durch ein Blechteil gebildet.

Eine Verstärkungsstruktur 150i bei einem Kupplungsarm 11i enthält zwei Verstärkungsrippen 151i, die parallel nebeneinander verlaufen und beide im Innenraum 152, das heißt also an der Oberseite des Armkörpers 52, angeordnet sind. Die Oberseiten 153 der beiden Verstärkungsrippen 151i sind bogenförmig. Die Krümmung dieser Bögen verläuft korrespondierend zur Krümmung des Krümmungsabschnittes 42 im Innenraum 152.

Die Verstärkungsrippen 151i verlaufen parallel und mit einem Abstand zueinander. Vorzugsweise sind die Verstärkungsrippen 151i jeweils in der Nähe der Querschmalseiten 53 angeordnet, das heißt an den einander entgegengesetzten äußeren Randbereichen der Querbreitseite 51.

Es versteht sich, dass Verstärkungsrippen wie vorher erläutert an der Oberseite eines erfindungsgemäßen Kupplungsarms angeordnet sein können, wobei auch die Anbringung an einer Unterseite Vorteile hat. Beispielsweise bildet eine an der Unterseite eines Kupplungsarms angeordnete Querrippe gleichzeitig einen Schutz für den Kupplungsarm, zum Beispiel wenn das Kraftfahrzeug 19 auf dem Untergrund aufsitzt, beispielsweise im Bereich einer Böschung oder dergleichen.

Es können an der Oberseite und der Unterseite eines Kupplungsarms Verstärkungsstrukturen mit mindestens einer Verstärkungsrippe vorgesehen sein. Zueinander zumindest abschnittsweise schrägverlaufende Verstärkungsrippen und/oder sich kreuzende Verstärkungsrippen sind auch möglich.

Die nachfolgend bei Kupplungsarmen 11j und 11k vorgestellten, unterseitig angeordneten Verstärkungsrippen 151j und 151k sind zudem an der Unterseite vorteilhaft kufenförmig ausgestaltet, so dass sie gegebenenfalls auf einem Untergrund aufgleiten können.

Die Verstärkungsrippe 151j ist an der Unterseite des Armkörpers 52 des Kupplungsarms 11j angeordnet und erstreckt sich sowohl am Außenumfang des unteren Krümmungsabschnitts 42 als auch im Wesentlichen über die gesamte Länge des geradlinigen Armabschnitts 44. Die Verstärkungsrippe 151j endet im Bereich oder vor dem oberen Krümmungsabschnitt 45. Auf der anderen Seite erstreckt sich die Verstärkungsrippe 151j bis zum Steckende 13, das geradlinig verläuft. Somit verstärkt die Verstärkungsrippe 151j nahezu sämtliche Abschnitte des Armkörpers 52, die außerhalb des Haltergehäuses 15a beim Gebrauch des Kupplungsarms 11j verlaufen, abgesehen von dem Kugelkopfende 46. Die Verstärkungsrippe 151j ist zweckmäßigerweise etwa in der Quermitte der unteren Querbreitseite 51 angeordnet. Beispielsweise wird die Verstärkungsrippe 151j durch einen Steg beziehungsweise ein Blech gebildet, das an den Armkörper 52 angeschweißt ist. Eine Querhöhe 155 der Verstärkungsrippe 151j ist im Wesentlichen konstant.

Es versteht sich, dass auch variierende Querhöhen möglich sind, wobei die Querhöhe insbesondere in stark belasteten Abschnitten eines jeweiligen Kupplungsarmes groß ist, in weniger belasteten Abschnitten geringer. So könnte eine nicht schematisch dargestellte Verstärkungsrippe auch beispielsweise einen Querhöhenverlauf 156 aufweisen.

Bei einem Kupplungsarm 11k sind zwei Verstärkungsrippen 151k einer Verstärkungsstruktur 150k vorgesehen, die eine gleichartige Geometrie wie die Verstärkungsrippe 151j aufweisen, das heißt sich am Außenumfang 154 des Krümmungsabschnitt 42 und entlang des geradlinigen Armabschnitts 44 erstrecken. Die beiden Verstärkungsrippen 151k verlaufen parallel zueinander und haben einen Abstand voneinander. Die Verstärkungsrippen 151k haben ferner einen Abstand 157 von den Außenrändern der unteren Querbreitseite 51.

Ein Kupplungsarm 111 hat als eine Verstärkungsstruktur 1501 eine Wölbung 158. Die Wölbung 158 wird vor dem Einbringen der Krümmungen 42, 45 in einen Rohling, der später den Armkörper 521 bildet, eingeprägt. Sodann wird der Rohling mit der bereits eingeprägten Wölbung 158 umgeformt, wobei die beiden Krümmungsabschnitte 42, 45 gebildet werden.

Die Wölbung 158 steht nach oben vor die Oberseite des Kupplungsarms 111 vor. Die Wölbung 158 erstreckt sich entlang des geradlinigen Armabschnittes 44 sowie auch im Innenraum 152 des Krümmungsabschnitts 42. Somit ist der Kupplungsarm 111 an seinen besonders stark belasteten Abschnitten durch die Wölbungsstruktur mit der Wölbung 158 verstärkt.

Im Grunde genommen ist mit der Wölbung 158 eine Struktur mit einer Belastbarkeit geschaffen, die etwa einer Verstärkungsrippe zweier unterer Verstärkungsrippen sowie einer zentralen oberen Verstärkungsrippe entspricht.

Es versteht sich, dass bei einem Kupplungsarm auch eine nach unten, das heißt zur Unterseite des Armkörpers gerichtete Wölbung zu dessen Verstärkung vorgesehen sein kann. Auch eine Kombination von Wölbungen nach unten und nach oben an einem einzigen Kupplungsarm sind möglich.

Ebenfalls im Sinne einer Verstärkung wirkt es, wenn besonders belastete Abschnitte des Kupplungsarms eine größere Querschnittsgröße aufweisen als weniger belastete Abschnitte. So hat ein Armkörper 52m des Kupplungsarms 11m im Bereich des unteren Krümmungsabschnittes 42 seine größte Querschnittsfläche oder Querschnittsgröße. Die Größe des Querschnitts nimmt im Bereich des geradlinigen Abschnittes von dem Krümmungsabschnitt 42 ausgehend kontinuierlich ab und erreicht am Ende des Abschnittes 44 etwa die Querschnittsgröße des Kugelkopfendes 46. Die Querschnittsgeometrie des Armkörpers 52m ist allerdings über die gesamte Längserstreckungsrichtung des Kupplungsarms 11m gleichbleibend, nämlich vorliegend rechtekkig, insbesondere flach-rechteckig.

Unterhalb des Steckendes 13 ist ein podestartiger Vorsprung 159 zum Tragen des Steckanschlagkörpers 49 an dem Armkörper 52m angeformt.

Ferner ist es möglich, eine Anfräsung oder einen An- oder Ausschnitt (z.B. mit einer anhand des Halters 15a erläuterten Schneidmethoden) unterhalb eines Steckendes und/oder an einem Steckende, z.B. entlang einer Teillänge eines Steckendes oder auch über die vollständige Länge eines Steckendes, gegebenenfalls auch jeweils bis zu dessen freiem Ende hin, zur Ausbildung einer Einführschräge und/oder einer Keilschräge und/oder eines Steckanschlags vorzusehen.

Die anhand der Kupplungsarme 11h-11m exemplarisch vorgestellten Verstärkungen sind auch in beliebiger Kombination miteinander, besonders vorteilhaft bei Armkörpern mit einem flachen Querschnitt, einsetzbar. Ferner kann man derartige Kupplungsarme auch beweglich an einem Halter lagern, d.h. bei Anhängekupplungen mit schwenk- und/oder schiebebeweglichem Kupplungsarm einsetzen. Ein Einsatz bei manuell verriegelbaren Anhängekupplungen ist auch möglich.

Die Anhängekupplung 10a ist bequem handhabbar, da Haltemittel 56 den Kupplungsarm 11a nach seinem Einstecken in die Steckaufnahme 14 halten, bis die Verriegelungseinrichtung 20a den Kupplungsarm 11a motorisch verriegelt und zweckmäßigerweise verspannt.

Ein Halten eines Kupplungsarms durch Haltemittel zur anschließenden motorischen Verriegelung und/oder Verspannung ist in der Handhabung bequem und erhöht die Bediensicherheit.

Die Haltemittel 56 umfassen Rastmittel 57 zum Verrasten des Kupplungsarms 11a am Halter 12a bei seinem Einstecken in die Steckaufnahme 14. Die Rastmittel 57 umfassen den Rastkörper 32a, der in die als Rastaufnahme ausgestaltete Rastkontur 54a, vorliegend eine Kugelkalotte, einrastet.

Der Rastkörper 32a ist vorteilhaft als ein Sicherungskörper 58 ausgestaltet. Der Sicherungskörper 58 wird durch einen Sicherungsbolzen 59 gebildet, der linear beweglich im Antriebsgehäuse 26 gelagert ist. Der Sicherungsbolzen 59 bildet ein zusätzliches Verriegelungselement, das den Kupplungsarm redundant zu der motorischen Verriegelung mittels des Formschlusselements 24a in der Steckaufnahme 14 sichert. Bei Ausfall der motorischen Verriegelung ist der Kupplungsarm 11a sicher am Halter 12a verriegelt. Die Sicherung mittels des Sicherungsbolzens 59, das heißt die redundante Verriegelung des Kupplungsarms 11a, ist jedoch vorzugsweise nicht spielfrei, so dass ein Bediener durch Vibrationsgeräusche des Kupplungsarms 11a beim Fahrbetrieb des Kraftfahrzeugs 19 eine nicht ganz einwandfreie Verriegelung erkennen kann.

Der Sicherungsbolzen 59 ist in einem oberen Bereich 60 des Antriebsgehäuses 26 linear beweglich gelagert. In einem darunter liegenden unteren Bereich 61 sind parallel zum Sicherungsbolzen 59 der Verriegelungsmotor 22 und das Spanngetriebe 23a ebenfalls linear beweglich in dem Antriebsgehäuse 26 aufgenommen. Im den Kupplungsarm 11a verriegelnden Zustand stehen das Formschlusselement 24a sowie ein vorderes Ende 62 des Sicherungsbolzens 59 vor eine Stirnwand 63 des Antriebsgehäuses 26 vor. Die Stirnwand 63 liegt im montierten Zustand des Halters 12a flächig an der ihr zugewandten Seitenwand 34 an. Dann fluchten die Führungskanäle 30a, 31 mit Durchtrittsöffnungen 64, 65 der Stirnwand 63 für das Formschlusselement 24a und den Rastkörper 32a. Die Durchtrittsöffnungen 64, 65 sind zweckmäßigerweise als Führungskanäle zur Führung des Formschlusselements 24a und des Rastkörpers 32a ausgestaltet, so dass diese beiden linear beweglichen Komponenten sowohl im Antriebsgehäuse 26 als auch im Haltergehäuse 15a geführt sind.

Beim Einstecken des Kupplungsarms 11a in die Steckaufnahme 14 läuft nun folgende Verriegelungssequenz ab:

Zunächst gleitet das vordere Ende 62 des Rastkörpers 32a, der einen Rastvorsprung bildet, an der Verdrängerschräge 55 entlang, so dass der Rastkörper 32a vom Kupplungsarm 11a weg in Richtung des Antriebsgehäuses 26 verdrängt wird bis zu einer Stellung, in der das freie Ende 62 nicht mehr in einen Einsteckweg des Kupplungsarms 12a vor die Innenkontur der Steckaufnahme 14 vorsteht.

Der Rastkörper 32a ist vorteilhaft federbelastet, so dass er beim vorgenannten Verschieben entgegen der Federkraft einer Feder 66 verstellt wird, die sich an einer Wand 67 eines Steuerungsgehäuses 68 im Innenraum des Antriebsgehäuses 26 abstützt. Die Wand 67 ist der Stirnwand 63 entgegengesetzt. Der Sicherungsbolzen 59 durchdringt die Feder 66, die eine Federanordnung bildet. Das Steuerungsgehäuse 68 kapselt eine optional auch bei den anderen Anhängekupplungen 10b-10g einsetzbare Steuerung 69 und schützt diese so vor Umwelteinflüssen.

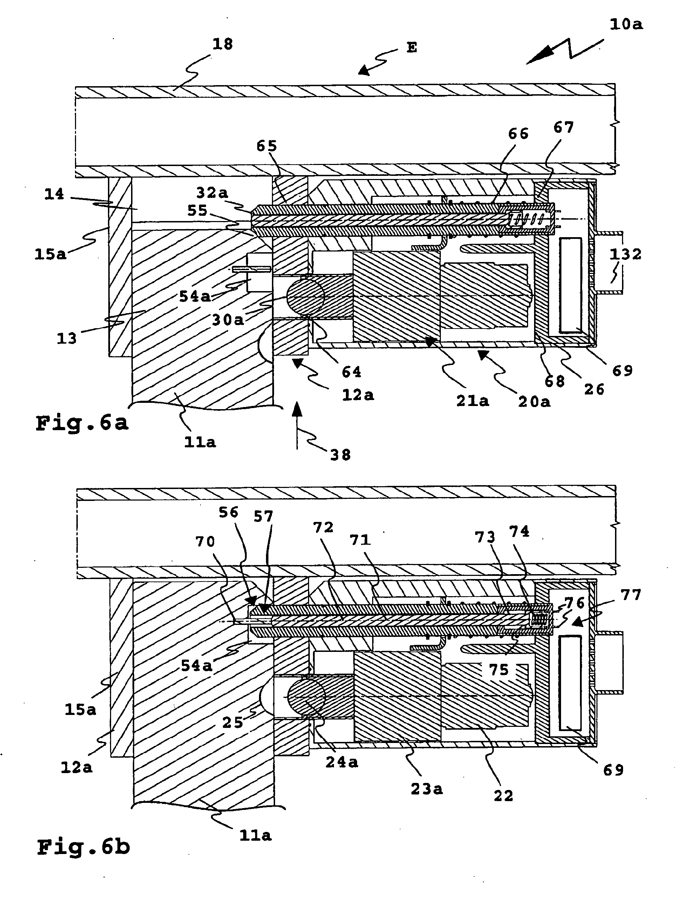

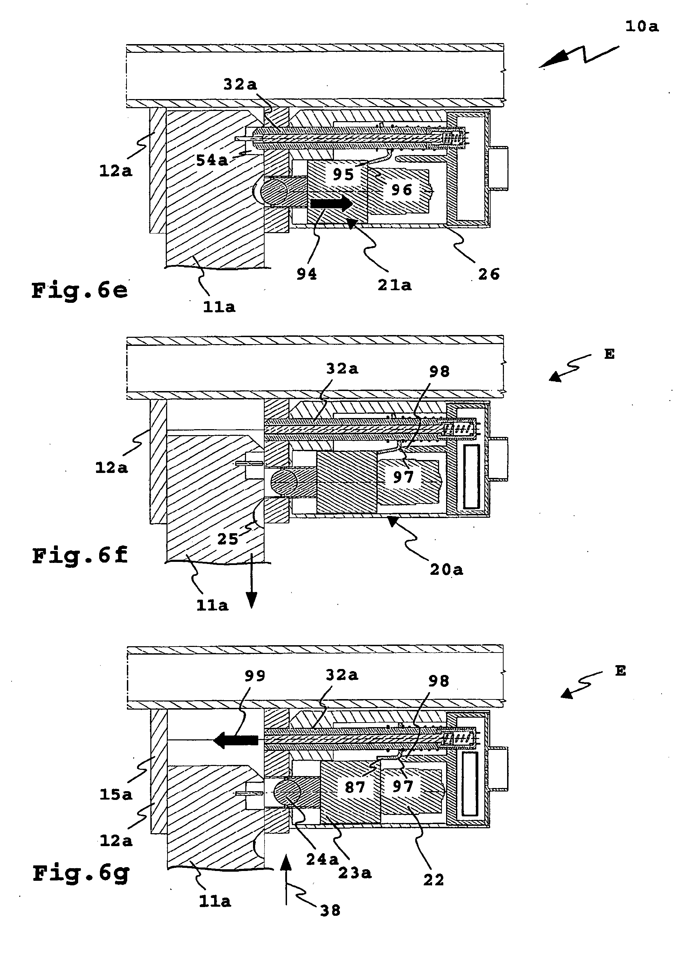

Wenn der Kupplungsarm 11a vollständig in die Steckaufnahme 14 eingesteckt ist (Figur 6b), rastet der Rastkörper 32a / der Sicherungsbolzen 59 in die Rastaufnahme oder Rastkontur 54a, so dass der Kupplungsarm 11a am Halter 12a unverlierbar verrastet ist. Somit ist bereits eine erste Verriegelungsstufe realisiert, ohne dass ein Bedienereingriff nötig ist.

Bei einem einen Kupplungsarm redundant zur motorischen Verriegelung am Halter sichernden Sicherungskörper und der zugeordneten Sicherungsaufnahme ist vorteilhaft, wenn Stützflächen quer zur Einsteckrichtung vorgesehen sind, beim dem Sicherungsbolzen 59 z.B. dessen Außenumfang, der an einem Innenumfang der Rastaufnahme 54a anschlägt.

Im Innern der als Rastaufnahme ausgestalteten Rastkontur 54a ist ein Betätigungsvorsprung 70 angeordnet, beispielsweise ein vor die Rastkontur 54a vorstehender Stift. Der Betätigungsvorsprung 70 betätigt ein Betätigungselement 71, das am Rastkörper 32a beweglich gelagert ist. Das Betätigungselement 71 wird beispielsweise durch einen Taststößel 72 gebildet, der in einer sich in Längserstreckungsrichtung des Sicherungsbolzens 59 erstreckenden Längsbohrung linear beweglich aufgenommen ist.

Der Vorteil eines Betätigungsvorsprungs in einer Rastaufnahme ist, dass am oder neben dem Rastkörper beweglich gelagerte Betätigungselement zum Schalten eines Verriegelungsantriebs nur dann betätigbar ist, wenn der Rastkörper in die Rastaufnahme einrastet.

Das Betätigungselement 71 ist durch eine Feder 73 federbelastet, die in einer Federkammer 74 im hinteren Bereich des Sicherungsbolzens 59 angeordnet ist. Die Feder 73 spannt den Taststößel 72 derart vor, dass sein freies, durch den Betätigungsvorsprung 70 betätigbares Ende nicht vor eine Stirnseite des Sicherungsbolzens 59 vorsteht, zweckmäßigerweise mit dieser Stirnseite fluchtet. Dazu sind Anschlagflächen 75 an einem hinteren Ende des Taststößels 72 vorgesehen, die bei der zum vorderen Ende 62 hin gerichteten Bewegung des Taststößels 72 an einer Innenwand der Federkammer 74 anschlagen.

Wenn das Betätigungselement 71 hingegen betätigt ist, schließt es elektrische Kontakte 76 eines elektrischen Schalters 77, der mit der Steuerung 69 verbunden ist.

Die Steuerung 69 schaltet daraufhin den Verriegelungsmotor 22 zu einer Verstellbewegung aus seiner in Figur 6b noch vorhandenen Entriegelungsstellung E in Richtung der Verriegelungsstellung V ein.

Der Verriegelungsmotor 22 treibt dann das Spanngetriebe 23a, das vorliegend ein Planetengetriebe ist, wobei auch andere Getriebearten ohne weiteres möglich sind, zu einer rotatorischen Bewegung an. Das Spanngetriebe 23a betätigt abtriebsseitig einen Formschlusselement-Träger 78a. Vorliegend treibt das Spanngetriebe 23a den Formschlusselement-Träger 78, an dessen vorderem, freiem Ende das Formschlusselement 24a angeordnet ist, rotatorisch an. Der Formschlusselement-Träger 78 ist vorliegend etwa zylindrisch und nimmt an seiner Vorderseite das als Kugel ausgestaltete Formschlusselement 24a auf. An einem Außenumfang des Formschlusselement-Trägers 78 ist ein Schraubgewinde 79 angeordnet, mit dem der Formschlusselement-Träger 78 in ein Schraubgewinde 80 einschraubbar ist, das sich in dem Führungskanal 30a und/oder der Durchtrittsöffnung 64 erstreckt. Wenn sich das Schraubgewinde 80 sowohl im Führungskanal 30a als auch in der Durchtrittsöffnung 64 erstreckt, ist dadurch ein besonders fester Halt möglich. Wenn das Schraubgewinde 80 nur in der Durchtrittsöffnung 64 verläuft, ist die Montage der Verriegelungseinrichtung 20a am Haltergehäuse 15a besonders einfach, da der Formschlusselement-Träger 78 lediglich in die Durchtrittsöffnung 64 eingesteckt wird.

Man könnte auch sagen, dass die beiden Schraubgewinde 79, 80 einen Bestandteil des Spanngetriebes 23a bilden. Denkbar wäre auch ein Ausführungsbeispiel, bei dem ein Verriegelungsmotor in der Art des Verriegelungsmotors 22 den Formschlusselement-Träger 78 oder ein Formschlusselement direkt, d.h. ohne ein zwischengeschaltes Getriebe 23a, antreibt.

Vorteilhaft ist eine Steigung der Schraubgewinde 79, 80 zu einer Selbsthemmung ausgestaltet, so dass an sich ein Lösen der Verriegelung nicht zu befürchten ist.

Ein Getriebegehäuse 81 des Spanngetriebes 23a, zumindest des Planetengetriebeanteils davon, hat eine im Wesentlichen kubische Gestalt. Das Getriebegehäuse 81 bildet einen Gleitkörper, der in einer Führung 82 im Innern des Antriebsgehäuses 26 linear verdrehsicher geführt ist. Die Führung 82 wird beispielsweise durch einen Führungskanal oder eine Führungsausnehmung im Antriebsgehäuse 26 gebildet.

Die Anhängekupplung 10a hat eine Mitnahmeeinrichtung 83a zu einer Mitnahmekopplung des Verriegelungsantriebs 21a mit dem Rastkörper 32a, vorliegend also dem Sicherungsbolzen 59.

Eine Klinke 84a der Mitnahmeeinrichtung 83a ist schwenkbeweglich am Rastkörper 32a gelagert. Die Klinke 84a ist vorliegend durch ein Winkelstück gebildet, bei dem ein Lagerschenkel 85 von dem Sicherungsbolzen 59 mit Schwenkspiel durchdrungen ist und ein Mitnehmerschenkel 86 zur Mitnahmekopplung mit dem Verriegelungsantriebe 21a vorgesehen ist.

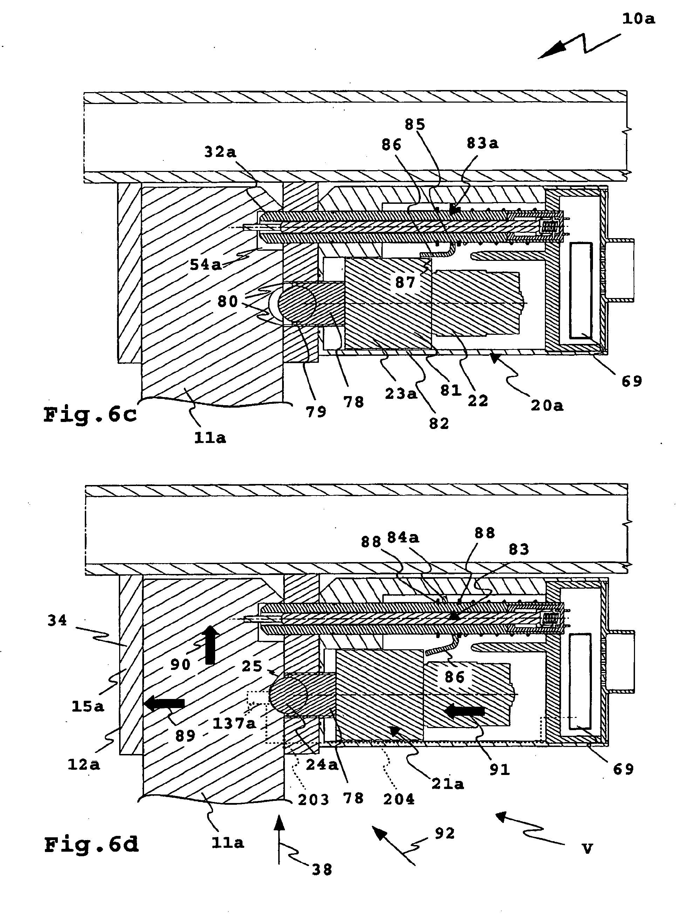

Während der Verriegelungsbewegung 91 (Figur 6c) ist keine Mitnahmekopplung zwischen dem Verriegelungsantrieb 21a und der Mitnahmeeinrichtung 83a vorgesehen. Der Verriegelungsantrieb 21a gleitet an einer Gleitfläche 87 an der dem Verriegelungsantrieb 21a zugewandten Unterseite des Mitnehmerschenkels 86 entlang. Vorliegend bildet das Getriebegehäuse 81 den Gleitkörper des Verriegelungsantriebs 21a. Die Klinke 84a bleibt dabei ortsfest, da sie zwischen zwei Längsvorsprüngen, beispielsweise Flanschen 88, des Rastkörper 32a linear festgelegt ist. Zwischen den beiden Flanschen 88 ist ein ein Schwenken der Klinke 84a zulassender Abstand vorgesehen.

Am Ende der Verriegelungsbewegung des Verriegelungsantriebs 21a presst dieser das Formschlusselement 24a in die Formschlusskontur 25, das heißt die Formschlussaufnahme, am Kupplungsarm 11a ein (Figur 6d). Die Verriegelungseinrichtung 20a übt dabei eine Spannkraft 89 quer zu der Einsteckrichtung 38 und eine Spannkraft 90 parallel zur Einsteckrichtung 38 aus, so dass der Kupplungsarm 11a in beiden Richtungen in die Steckaufnahme 14 gespannt ist. Durch die Spannkraft 90 schlägt der Steckanschlagkörper 49 an dem Steckanschlag 39 an.

Die Spannkraft 89 verläuft parallel zur Bewegungsrichtung einer Verriegelungsbewegung 91 des Verriegelungsantriebs 21a in seine Verriegelungsstellung. Somit presst der Verriegelungsantrieb 21a den Kupplungsarm 11a gegen die ihm gegenüberliegende Seitenwand 34 des Haltergehäuses 15a.

Da die Bewegungsrichtung der Verriegelungsbewegung 91 quer zur Einsteckrichtung 38 verläuft, ist zur Erzeugung der Spannkraft 90 eine Kraftrichtungsumkehr nötig. Die Konturgestaltung der Formschlusskontur 25 ist so getroffen, dass sie die quer zur Einsteckrichtung 38 verlaufende Spannkraft 89 in Richtung der Spannkraft 90 umlenkt. Dazu verläuft die Formschlusskontur 25 beispielsweise in Kraftrichtung der Spannkraft 90 flacher und entgegen dieser Richtung steiler, was in Figur 6c erkennbar ist. Ferner ist eine außermittige Anordnung der Formschlusskontur 25 und des Formschlusselements 24a relativ zueinander zu einer Kraftrichtungsänderung vorteilhaft.

Wenn die Bewegungsrichtung oder Spannrichtung eines erfindungsgemäßen Verriegelungsantriebs jedoch schräg verläuft, etwa entsprechend einer Pfeilrichtung 92 (Figur 6b), was man beispielsweise durch eine entsprechende Schrägführung des Verriegelungsantriebs oder eine Kraftumlenkung durch ein Getriebe bewirken könnte, ist eine Kraftumlenkung wie beispielsweise bei der Formschlusskontur 25 nicht nötig.

Der Formschlusselement-Träger 78 mit seinem stirnseitig angeordneten Formschlusselement 24a, das beispielsweise in eine kalottenartige Aufnahme am stirnseitigen Ende des Formschlusselement-Trägers 78 eingepresst ist, bildet eine Art Spannschraube zum Verspannen des Kupplungsarms 11a am Halter 12a. Die selbsthemmende Wirkung der Schraubgewinde 79, 80 verhindert an sich ein Lockern des Kupplungsarms 11a am Halter 12a. Dennoch ist es beim Fahrbetrieb des Kraftfahrzeugs 19 nicht vollständig auszuschließen, dass sich der Kupplungsarm 11a lockert, beispielsweise nach längerem Nichtgebrauch, nach langem Fahrbetrieb, bei besonders hoher Belastung, durch Vibrationen oder dergleichen.

Gegen dieses Lockern ist vorteilhaft vorgesehen, dass die Steuerung 69 den Verriegelungsantrieb 21a immer wieder zu einem Nachspannen, das heißt zu einer Verriegelungsbewegung in Richtung der Verriegelungsstellung V, ansteuert. Dies kann beispielsweise im Rahmen eines vorbestimmten Zyklus' geschehen, zum Beispiel alle 10 Minuten oder dergleichen. Die Verriegelungseinrichtung 20a ist in dieser Situation zur Einnahme der Verriegelungsstellung V angesteuert, die Verriegelungsstellung V ist an sich erreicht (Figur 6d). Die Steuerung 69 kann auch weitere Auslösebedingungen zu dem Nachspannen des Kupplungsarms 11a auswerten und beispielsweise bei jedem Start eines Antriebs 93 des Kraftfahrzeugs 19 den Kupplungsarm 11a nachspannen.

Dieses Nachspannen kann zweckmäßigerweise getaktet sein, wobei der Verriegelungsmotor 22 des Verriegelungsantriebs 21a zu zwei- oder dreimaligem kurzzeitigem Verriegelungsbetrieb von der Steuerung 69 angesteuert wird.

Vorteilhaft ist bei dem Verriegelungsmötor 22 und/oder der Steuerung 69 eine Strombegrenzungsschaltung zur Begrenzung eines Stroms beim Antreiben des Verriegelungsmotors 22, insbesondere zu seinem Abschalten der Verriegelungsstellung oder Spannstellung, vorgesehen, wenn das mindestens eine Formschlusselement mit der Formschlusskontur in Eingriff ist.

Wenn die Steuerung 69 einen Entriegelungsbefehl erhält, steuert sie den Verriegelungsantrieb 21a zu einer Entriegelungsbewegung 94 in Richtung der Entriegelungsstellung E an, so dass der Formschluss zwischen dem Formschlusselement 24a und der Formschlusskontur 25 aufgehoben wird (Figuren 6e-6g). Zudem sorgt die Mitnahmeeinrichtung 83a dafür, dass auch der Rasteingriff des Rastkörpers 32a in der Rastaufnahme beziehungsweise Rastkontur 54a aufgehoben wird. Dabei ist die Bewegungsfolge so, dass zunächst die Verspannung beziehungsweise der Formschluss durch das Formschlusselement 24a und die Formschlusskontur 25 aufgehoben wird, so dass der Kupplungsarm 11a am Halter 12a etwas Spiel erhält. Erst dann wird der Rastkörper 32a aus der insbesondere als Rastaufnahme ausgestalteten Rastkontur 54a herausbewegt.

Bereits kurz vor Erreichen der Verriegelungsstellung V kommt die Klinke 84a insoweit von dem Verriegelungsantrieb 21a frei, dass sie schwenken kann. Die Klinke 84a schwenkt in Richtung des Verriegelungsantriebs 21a (nach unten; Figur 6d), so dass eine Mitnehmerfläche 95 der Klinke 84a einem Mitnahmeanschlag 96 des Verriegelungsantriebs 21a gegenüberliegt. Die Mitnehmerfläche 95 ist beispielsweise die Stirnseite des Mitnehmerschenkels 86. Der Mitnahmeanschlag 96 ist beispielsweise am Getriebegehäuse 81 vorgesehen, zum Beispiel an dessen dem Verriegelungsmotor 22 zugewandter Stirnseite.

Wenn nun der Verriegelungsantrieb 21a die Entriegelungsbewegung 94 durchführt (ab Figur 6e), schlägt die Klinke 84a am Mitnahmeanschlag 96 an, so dass der Rastkörper 32a aus dem Rasteingriff mit der Rastkontur 54a bewegt wird. Die Klinke 84a schlägt dabei an dem in der Zeichnung rechten Flansch 88 an.

Wenn der Rastkörper 32a vollständig aus der Rastkontur 54a herausbewegt ist, mithin also die Entriegelungsstellung E erreicht ist (Figur 6f), fällt der Kupplungsarm 11a aufgrund seiner Schwerkraft aus der Steckaufnahme 14a selbständig heraus und kann vom Bediener vom Halter 12a entfernt werden.

Wenn der Verriegelungsantrieb 21a die Entriegelungsstellung E erreicht hat, kommt die Mitnahmeeinrichtung 83a von der Mitnahmekopplung frei. Die Klinke 84a schlägt mit einer Freigabeanschlagfläche 97, die beispielsweise am Lagerschenkel 85 angeordnet ist, an einem im Bewegungsweg der Entriegelungsbewegung 94 angeordneten Freigabeanschlag 98 an. Der Freigabeanschlag 98 ist beispielsweise mit dem Antriebsgehäuse 26 verbunden. Die Klinke 84a schwenkt dann vom Verriegelungsantrieb 21a weg, und zwar so weit, dass die Mitnehmerfläche 95 außer Eingriff mit dem Mitnahmeanschlag 96 kommt. Zudem ist die Gleitfläche 87 oberhalb des Getriebegehäuses 81. Der Rastkörper 32a ist vom Verriegelungsantrieb 21a entkoppelt und kann eine Rastbewegung 99 in Richtung der Steckaufnahme 14 durchführen. Ein Wiederverrasten mit dem Kupplungsarm 11a (Figur 6a) ist dann wieder möglich.

Eine Eindringtiefe des Formschlusselements 24a in die zugeordnete Formschlusskontur 25 ist größer als eine entsprechende Eindringtiefe des Rastkörpers 32a in die ihm zugeordnete Rastkontur 54a. Dies trägt dazu bei, dass zunächst die Formschlussverbindung zwischen dem Formschlusselement 24a und der Formschlusskontur 25 und anschließend die Rastverbindung zwischen dem Rastkörper 32a und der Rastkontur 54a aufgehoben wird.

Zum Einschalten des Verriegelungsantriebs 21a in Richtung der Verriegelungsstellung V ist der Schalter 77 vorgesehen, der sozusagen automatisch durch das Einstecken des Kupplungsarms 11a in die Steckaufnahme 14 ausgelöst wird und der Steuerung 69 signalisiert, den Verriegelungsantrieb 21a zu einer Verriegelungsbewegung anzusteuern.

Zur Betätigung in die Entriegelungsstellung E ist ein separater Antriebsschalter 100a vorgesehen. Der Antriebsschalter 100a ist mit einem Betätigungselement 101a im Außenbereich des Kraftfahrzeugs 19 betätigbar. Das Betätigungselement 101a hat einen Bedienbereich 102 nahe der Steckaufnahme 14. Somit kann ein Bediener gleichzeitig und vor Ort den Verriegelungsantrieb 21a zu einer Entriegelung ansteuern und zugleich den Kupplungsarm 11a ergreifen.

Das Betätigungselement 101a und der Antriebsschalter 100a sind in einem gemeinsamen Betätigungsgehäuse 103 angeordnet. Das Betätigungselement 101a bildet eine Druckfläche beziehungsweise ein Druckelement zur Betätigung beziehungsweise zum Schließen elektrischer Kontakte des Antriebsschalters 100a. Das Betätigungsgehäuse 103 ist an einem Bedienteilträger 104 angeordnet. Der Bedienteilträger 104 ist integral mit einem Steckdosenträger 105 für eine Anhänger-Steckdose 106 zum elektrischen Anschluss des Anhängers 17 an das Kraftfahrzeug 19 verbunden. Ein die Anhänger-Steckdose 106 tragender Tragabschnitt 107 des Steckdosenträgers 105 steht beispielsweise vom Antriebsgehäuse 26 nach unten vor und ist vorzugsweise an diesem festgelegt.

Es versteht sich, dass man einen Steckdosenträger und/oder einen Bedienteilträger auch beispielsweise am die Steckaufnahme aufweisenden Haltergehäuse oder unmittelbar zum Beispiel auch am Kraftfahrzeug, z.B. dem Querträger 18, befestigen könnte.

Der Tragabschnitt 107 sowie der Bedienteilträger 104 sind zueinander winkelig. Der Bedienteilträger 104 verläuft im Wesentlichen tangential neben dem Kupplungsarm 11a, beispielsweise im Bereich des unteren Krümmungsabschnittes 42. Die Querschmalseite 53 des Kupplungsarms 11a und der plattenartige Bedienteilträger 104 verlaufen parallel zueinander.

Diese Anordnung hat den Vorteil, dass das Betätigungselement 101a unmittelbar neben dem Kupplungsarm 11a angeordnet ist und der Bediener zugleich das Betätigungselement 101a betätigen und den Kupplungsarm 11a ergreifen kann.

Zudem hat diese winkelige Konfiguration, bei der ein Steckdosengehäuse 108 und der Bedienteilträger 104 im Wesentlichen parallel zueinander verlaufen, den nachfolgenden Vorteil:

Zum Einstecken eines Anhängersteckers in die Anhänger-Steckdose 106 muss ein Dosendeckel 109 aufgeklappt werden, damit die Kontakte im Innern des Steckdosengehäuses 108 zugänglich sind (Figur 7). Nun ist der Dosendeckel 109 derart am Steckdosengehäuse 108 angelenkt, dass er beim Aufschwenken das Betätigungselement 101a verdeckt. Somit ist es nicht mehr möglich, den Antriebsschalter 100a zu betätigen. Dies stellt einen Fehlbedienungsschutz dar, da bei eingestecktem Anhängerstecker ein Lösen des Kupplungsarms 11a ohnehin nicht sinnvoll und wünschenswert ist. Weiterhin ist das Betätigungselement 101a durch den geöffneten Dosendeckel 109 beim Fahrbetrieb eines Gespanns aus Kraftfahrzeug 19 und Anhänger 17 verdeckt, so dass das Betätigungselement 101a gegen eine Fehlbetätigung beispielsweise durch umherfliegende Äste oder dergleichen geschützt ist.

Als optionale Sicherheitsmaßnahme ist bei der Anhänger-Steckdose 106 vorteilhaft ein Aktivierungsschalter 110 vorgesehen, der durch Öffnen und Schließen des Dosendeckels 109 betätigbar ist. Bei geöffnetem Dosendeckel 109 unterbricht der Aktivierungsschalter 110 beispielsweise eine elektrische Verbindung zum Antriebsschalter 100a, um somit den Antriebsschalter 100a zu deaktivieren. Bei geschlossenem Dosendeckel 109 hingegen schaltet der Aktivierungsschalter 110 den Antriebsschalter 100a aktiv. Das Konzept eines durch einen Dosendeckel schaltbaren Aktivierungsschalters ist auch vorteilhaft einsetzbar, wenn der geöffnete Dosendeckel 109 beispielsweise das Betätigungselement 101a nicht verdecken könnte, z.B. bei einem anderen Anbringungsort. Ferner kann das Konzept auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung verwendet werden.

Es versteht sich, dass der Antriebsschalter 100a nicht unmittelbar im Außenbereich, das heißt in der Nähe des Halters 12a, angeordnet sein muss. Es wäre beispielsweise auch möglich, den Antriebsschalter 100a im Innenraum des Kraftfahrzeugs 19, beispielsweise im Kofferraumbereich oder dergleichen, anzuordnen und zwischen dem im Außenbereich nahe beim Halter 12a angeordneten Betätigungselement 101a und dem Antriebsschalter 100a ein Übertragungsglied oder eine Übertragungsgliederanordnung vorzusehen. Das Übertragungsglied 111 ist beispielsweise ein Bowdenzug, ein Seilzug, ein Übertragungsgetriebe oder -gestänge. Auch eine fluidische, beispielsweise pneumatische Übertragung des Betätigungselements 101a auf den im Innern angeordneten Antriebsschalter 100a ist ohne weiteres möglich.

Ein weiteres, innovatives Bedienkonzept bei der Anhängekupplung 10a beruht auf einer drahtlosen Bedienung. Nun wäre es zwar prinzipiell möglich, den Verriegelungsantrieb 21a ausschließlich drahtlos anzusteuern und so die Verriegelung und/oder die Entriegelung sozusagen aus der Ferne vorzugeben. Dies könnte bei einer in der Zeichnung nicht dargestellten Variante der Anhängekupplung realisiert sein.

Bevorzugt ist jedoch eine Variante, bei der die Verriegelung, wie oben bereits beschrieben, durch das Einstecken des Kupplungsarms 11a in die Steckaufnahme 14 mittels des Schalters 77 automatisch ausgelöst wird. Zur Entriegelung ist ein drahtloses Konzept vorgesehen, das allerdings vorteilhaft nach einem weiteren innovativen, Ansatz nur im Nahbereich um die Steckaufnahme 14 des Halters 12a funktioniert. An sich ist ein drahtloses Ansteuern, das nur im Nahbereich des Halters funktioniert, auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung vorteilhaft.

In diesem Fall umfasst ein weiteres Betätigungselement 101b einen Funkempfänger 112 mit einem eng begrenzten, nämlich nur im Bereich des Halters 12a wirksamen Empfangsbereich 113 für einen Sender 114, der beispielsweise in einem Gehäuse eines Fahrzeugschlüssels 115 zum Starten des Kraftfahrzeugs 19 angeordnet ist. Wenn sich der Bediener mit dem Fahrzeugschlüssel 115 also in der Nähe des Kupplungsarms 11a befindet, kann er den Sender 114 beispielsweise mittels eines Tastendrucks auf eine Bedientaste am Schlüsselgehäuse des Fahrzeugschlüssels 115 betätigen und somit einen Entriegelungsbefehl an den Funkempfänger 112 senden. Dieser meldet das Entriegelungssignal an die Steuerung 69, welche den Verriegelungsantrieb 21a zu einer Entriegelung der Verriegelungseinrichtung 20a ansteuert. Es versteht sich, dass auf demselben Wege prinzipiell auch eine drahtlose Ansteuerung zu einer Verriegelung der Verriegelungseinrichtung 20a möglich ist. Ferner wäre es möglich, den Sender 114 in einem separaten Gehäuse, das zweckmäßigerweise als ein Schlüsselanhängergehäuse ausgestaltet ist, anzuordnen.

Ein Bediener kann die Funktion der Verriegelungseinrichtung 20a mittels einer Funktionsanzeigeeinrichtung 116a erkennen. Die Funktionsanzeigeeinrichtung 116a umfasst beispielsweise eine Leuchtanzeige, insbesondere eine LED. Die Funktionsanzeigeeinrichtung 116a ist zweckmäßigerweise im Bedienbereich 102 angeordnet, so dass der Bediener vor Ort beim Anbringen des Kupplungsarms 11a am Halter 12a oder bei dessen Entnehmen erkennt, ob und wie die Verriegelungseinrichtung 20a funktioniert. Die Funktionsanzeigeeinrichtung 116a zeigt beispielsweise eine korrekte Verriegelung des Kupplungsarms 11a mit einer grünen Leuchtanzeige an, eine Entriegelung mit einer roten Leuchtanzeige. Während der Verriegelungsantrieb 21a läuft, blinkt die Funktionsanzeigeeinrichtung 116a.

Es versteht sich, dass auch weitere Anbringungsorte für erfindungsgemäße Funktionsanzeigeeinrichtungen möglich sind. So sind beispielsweise ebenfalls als Leuchtanzeigen ausgestaltete Funktionsanzeigeeinrichtungen 116b, 116c am Dosendeckel 109 und am Steckdosengehäuse 108 angeordnet. Die Funktionsanzeigeeinrichtung 116c kann beispielsweise bei geschlossenem Dosendeckel 109 signalisieren, dass der Antriebsschalter 100a aktivgeschaltet ist.

Auch eine akustische Funktionsanzeige ist vorteilhaft. So kann die Steuerung 69 beispielsweise eine akustische Funktionsanzeigeeinrichtung 117 umfassen, zum Beispiel einen Lautsprecher, der bei einem Fahrbetrieb des Verriegelungsmotors 22 ein Funktionsgeräusch, beispielsweise eine pulsierende Tonfrequenz, ausgibt. Ist die Verriegelung erfolgreich verlaufen, quittiert dies die Funktionsanzeigeeinrichtung 117 mit einem Dauerton für eine vorbestimmte Zeit. Es versteht sich, dass die Steuerung 69 auch einen Lautsprecher des Kraftfahrzeugs 19 vorteilhaft ansteuern kann (nicht dargestellt), z.B. einen Lautsprecher eines Audiosystems.

Weiterhin enthält die Steuerung 69 vorteilhaft einen Signalausgang 118 zur Ansteuerung einer Funktionsanzeigeeinrichtung 119 des Kraftfahrzeugs. Der Signalausgang 118 ist beispielsweise ein Bestandteil einer Busschnittstelle der Steuerung 69. Die Funktionsanzeigeeinrichtung 119 ist beispielsweise ein Display im Cockpit 120 des Kraftfahrzeugs 19.

Es versteht sich, dass auch nur eine der Funktionsanzeigeeinrichtungen 116a-c, 117 und/oder der Signalausgang 118 vorgesehen sein können. Die Funktionsanzeigeeinrichtungen 116a-c, 117 und der Signalausgang 118 sind vorteilhafte Optionen.

Bei der Anhängekupplung 10a ist zu dem bereits erläuterten Sicherheitskonzept mittels des Dosendeckels 109 ein weiteres, innovatives Sicherheitskonzept realisiert, das zugleich einen optimalen Diebstahlschutz darstellt.

Die Steuerung 69 schaltet nämlich den Verriegelungsmotor 22 und/oder den Antriebsschalter 100a und/oder 100b nicht dauerhaft aktiv, sondern nur für ein vorbestimmtes Zeitintervall anhand mindestens einer Auslösebedingung.

Diese Auslösebedingung kann beispielsweise ein von einem Freigabeschalter sendbares Freigabesignal sein. Beispielsweise ist im Cockpit 120 ein Freigabeschalter 121a und/oder in einem Gepäckabteil 122 des Kraftfahrzeugs 19 ein Freigabeschalter 121b angeordnet. Der Bediener kann beispielsweise somit im Innenraum des Kraftfahrzeugs 19 einen der Freigabeschalter 121a, 121b betätigen, worauf die Steuerung 69 für ein Zeitintervall, beispielsweise 15-30 Sekunden, den Antriebsschalter 100a aktiv schaltet, d.h. einen Betrieb des Verriegelungsmotors 22 zulässt. Der Bediener hat dann bequem Zeit, zum Halter 12a zu gehen und dort die Verriegelungseinrichtung 20a zu entriegeln.

Ein weiteres, innovatives Freigabekonzept ist in der Art des Keyless-Go ausgestaltet. Die Steuerung 69 umfasst einen zweckmäßigerweise am Halter 12a, beispielsweise am Antriebsgehäuse 26, angeordneten Funkempfänger 123 zum Empfang eines Freigabesignals, das mit einem hierfür vorgesehenen Freigabesender 124, der somit einen Freigabeschalter 121c darstellt, sendbar ist. Der Freigabesender 124 ist beispielsweise in einem Schlüsselanhängergehäuse 125 angeordnet. Er könnte auch beispielsweise im Fahrzeugschlüssel oder am Fahrzeugschlüssel 115 angeordnet sein. Der Funkempfänger 123 hat einen eng begrenzten Empfangsbereich ähnlich dem Empfangsbereich 113, so dass nur dann, wenn der Freigabesender 124 im Empfangsbereich des Funkempfängers 123 ist, der Antriebsschalter 100a freigeschaltet ist.

Es versteht sich, dass eine Freigabe zum Schalten der Verriegelungseinrichtung 20a in ihre Verriegelungsstellung V oder ihre Entriegelungsstellung E anhand eines der Freigabeschalter 121a-121c auch zeitlich unlimitiert, das heißt ohne das vorgenannte Zeitintervall, erfolgen kann. So kann der Antriebsschalter 100a beispielsweise immer dann aktivgeschaltet sein, wenn der Freigabesender 124 vom Funkempfänger 123 im Empfangsbereich 113 erkannt wird.

Nachfolgend werden verschiedene Szenarien vorgestellt, bei denen jeweils für ein Zeitintervall einer oder mehrere der Antriebsschalter 100a, 100b oder 100c von der Steuerung 69 aktivgeschaltet werden und nach Ablauf des Zeitintervalls wieder inaktiv.

Beispielsweise wertet die Steuerung 69 eine Funktionsstellung eines Motorstartschalters 126 aus und/oder ob der Fahrzeugschlüssel 115 in den Motorstartschalter 126 gesteckt ist. So kann beispielsweise vorgesehen sein, dass die Steuerung 69 nach einem Ausschalten des Antriebs 93 des Kraftfahrzeugs 19 das Zeitintervall startet. Auch ein Entfernen des Fahrzeugschlüssels 115 aus einem Zündschloss oder aus dem Motorstartschalter 126 kann für die Steuerung 69 eine Auslösebedingung zum Starten des Zeitintervalls sein.

Auch das Bestromen einer Leuchte des Kraftfahrzeugs 19, vorzugsweise einer Heckleuchte, kann eine Startbedingung für das Starten des Zeitintervalls zur Aktivschaltung eines Antriebsschalters 100a und/oder 100b sein. Vorzugsweise wertet die Steuerung 69 dazu Signale beziehungsweise Bestromungen von Heckleuchten, beispielsweise einer Nebelschlussleuchte 127 und/oder eines Rückfahrscheinwerfers 128 und/oder von Blinkleuchten 129 aus. Die Steuerung 69 ist zur Überprüfung einer Bestromung der Leuchten 127-129 mit Stromversorgungsleitungen 130 eines Bordnetzes 131 des Kraftfahrzeugs 19 verbunden. Aufgrund der Anbindung an Stromversorgungsleitungen 130 für Heckleuchten sind dabei die Leitungswege kurz. Wenn nun der Bediener des Kraftfahrzeugs 19 beispielsweise einen Rückwärtsgang einlegt, werden die Rückfahrscheinwerfer 128 aktiviert und die Steuerung 69 startet infolgedessen das Zeitintervall. Dazu kommt vorzugsweise eine zweite Auslösebedingung, die die Steuerung prüft, beispielsweise "Klemme 15 eingeschaltet", in der Regel die zweite Rastung des Motorstartschalters 126.

Eine weitere Variante kann vorsehen, dass beispielsweise beim Aktivieren der Nebelschlussleuchte 127 das Zeitintervall oder Zeitfenster zur Aktivierung des Antriebsschalters 100a, 100b von der Steuerung 69 geöffnet beziehungsweise gestartet wird. Auch hier wird zusätzlich zur Auslösebedingung "Nebelschlussleuchte an" vorzugsweise eine zusätzliche Auslösebedingung von der Steuerung 69 ausgewertet, das heißt also eine Auslösebedingungsgruppe. Diese zweite Auslösebedingung kann beispielsweise ebenfalls heißen, dass der Motorstartschalter 126 aktivgeschaltet ist ("Klemme 15 ein").

Durch die zusätzliche Auswertung der Stellung des Motorstartschalters 126 ist eine Diebstahlsicherung und eine Maßnahme gegen Fehlbedienung oder Manipulation realisiert.

Es versteht sich, dass die Steuerung 69 bei beiden Szenarien zweckmäßigerweise überprüft, ob der Antrieb 93 ausgeschaltet ist. Mithin ist es also bei laufendem Motor des Kraftfahrzeugs 19 nicht möglich, den Kupplungsarm 11a zu entriegeln und vom Halter 12a zu entnehmen.

Ein weiteres, besonders bevorzugtes Szenario sieht vor, dass die Steuerung 69 das Zeitintervall zur Aktivierung der Antriebsschalter 100a oder 100b nach dem Abstellen des Kraftfahrzeugs 19 beziehungsweise Deaktivieren desselben startet. Die Auslösebedingungsgruppe umfasst hier die Auslösebedingung, dass der Motorstartschalter 126 ausgeschaltet ist (in der Regel "Klemme 15 aus") und zudem mindestens eine, zweckmäßigerweise beide Blinkleuchten 129 bestromt werden. Hier macht man sich zunutze, dass ein Kraftfahrzeug nach dem Abstellen in der Regel verschlossen wird, wobei Kraftfahrzeuge in der Regel zur Quittierung eines korrekten Verschließvorganges die Blinkleuchten für eine Leuchtsequenz aktivieren, die mindestens ein Aufleuchten der Blinkleuchten umfasst. Wenn also der Motorstartschalter 126 in Stellung "Aus" geschaltet wird und zudem eine oder beide Blinkleuchten 129 mindestens einmal bestromt werden, öffnet die Steuerung 69 das Zeitfenster zur Aktivierung des Antriebsschalters 100a und/oder 100b. Nur dann ist beispielsweise der von außen zugängliche beziehungsweise betätigbare Antriebsschalter 100a freigeschaltet, so dass Fehlbedienungen oder Manipulationen nicht möglich sind. Durch die Abtastung/Ermittlung der Bestromung zweier Blinkleuchten ist eine hohe Fehlbedienungssicherheit oder Sicherheit gegen Fehlauswertung gegeben.

Zweckmäßigerweise ist vorgesehen, dass die Steuerung 69 eine Aktivschaltung des Antriebsschalters 100a und/oder 100b für das Zeitintervall oder Zeitfenster optisch und/oder akustisch signalisiert, beispielsweise über die Cockpit-Funktionsanzeigeeinrichtung 119, wo im Klartext angezeigt werden kann: "Anhängekupplung entriegelbar", und/oder an den extern angeordneten Funktionsanzeigeeinrichtungen 116a-116c. Diese können beispielsweise blinken, eine vorbestimmte Farbe anzeigen oder dergleichen, um die Betriebsbereitschaft beziehungsweise Entriegelungs- oder Verriegelungsbereitschaft zu signalisieren.

Eine weitere Sicherheitsmaßnahme gegen Fehlbedienung kann vorteilhaft vorsehen, dass die Steuerung 69 nur dann ein Starten des Antriebsschalters 100a oder ein Starten des Verriegelungsmotors 22 zulässt, wenn der Antriebsschalter 100a nach Beginn des Zeitintervalls von einer unbetätigten Stellung in eine Betätigungsstellung betätigt wird. Wenn also bereits vor Beginn des Zeitintervalls beispielsweise durch Verschmutzung, Kurzschluss oder dergleichen vom Antriebsschalter 100a das Signal "Verriegelungsmotor 22 an" und/oder "Verriegeln" und/oder "Entriegeln" kommt, startet die Steuerung 69 den Verriegelungsmotor 22 nicht.

Während einer Bestromung des Verriegelungsmotors 22 oder einer Betätigung des Antriebsschalters 100a ist es vorteilhaft, dass die Steuerung 69 das Zeitintervall gegebenenfalls verlängert, um eine vollständige Verriegelung oder Entriegelung zu ermöglichen.

Das Konzept des Zeitintervalls ist auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung vorteilhaft.

Eine Sicherheitsmaßnahme kann zudem vorsehen, dass die Steuerung 69 den Verriegelungsmotor 22 nur während einer Betätigung des jeweiligen Antriebsschalters 100a oder 100b bestromt, das heißt, dass der Verriegelungsvorgang oder Entriegelungsvorgang beim Loslassen des jeweiligen Antriebsschalters abgebrochen wird. Dabei kann es vorteilhaft sein, wenn die Steuerung 69 den Verriegelungsmotor 22 zu einer Entriegelungsbewegung 94 beziehungsweise Entriegelung ansteuert.

Die Verriegelungseinrichtung 20a hat zum Anschluss an das Bordnetz 131 beispielsweise elektrische Kontakte 132, insbesondere eine Anschlussbuchse. Die elektrischen Kontakte 132 sind zweckmäßigerweise auch zum Anschluss der Anhänger-Steckdose 106 vorgesehen, so dass sämtliche elektrischen Anschlüsse der Anhängekupplung 10a sozusagen gebündelt bei den Kontakten 132, das heißt an einem einzigen Anschlussort, zur Verfügung stehen. Die Kontakte 132 stehen beispielsweise vor das Steuerungsgehäuse 68 vor, in dessen Innenraum die elektrischen Komponenten der Steuerung 69 angeordnet sind.

Die Steuerung 69 umfasst beispielsweise einen Mikrocontroller, einen FPGA oder sonstige, zweckmäßigerweise programmierbare Komponenten.

Eine Variante der Erfindung sieht vorteilhaft vor, dass die Steuerung 69 beispielsweise auf eine oder mehrere der vorgenannten Auslösebedingungen programmierbar ist. Auch sonstige Parameter, beispielsweise eine Länge des Zeitintervalls zur Aktivierung der Antriebsschalter 100a, 100b, sind zweckmäßigerweise parametrierbar oder programmierbar, beispielsweise über ein Diagnosegerät einer Werkstatt. Vorteilhaft ist es, wenn ein Bediener selbst, z.B. im Cockpit 120, die Länge des Zeitintervalls und/oder sonstige Parameter der Steuerung 69 einstellen kann. Wenn der Bediener die vorteilhafte Bediensicherheit und Fehlmanipulationssicherheit nicht wünscht, kann er das Zeitintervall beispielsweise auf unendlich programmieren, so dass es sozusagen nie endet und der Antriebsschalter 100a und/oder 100b stets aktiviert sind. Zweckmäßigerweise ist allerdings die Auslösebedingung, dass der Antrieb 93 des Kraftfahrzeugs 19 während eines Verriegelns oder Entriegelns der Anhängekupplung 10a außer Betrieb ist, nicht ausparametrierbar.

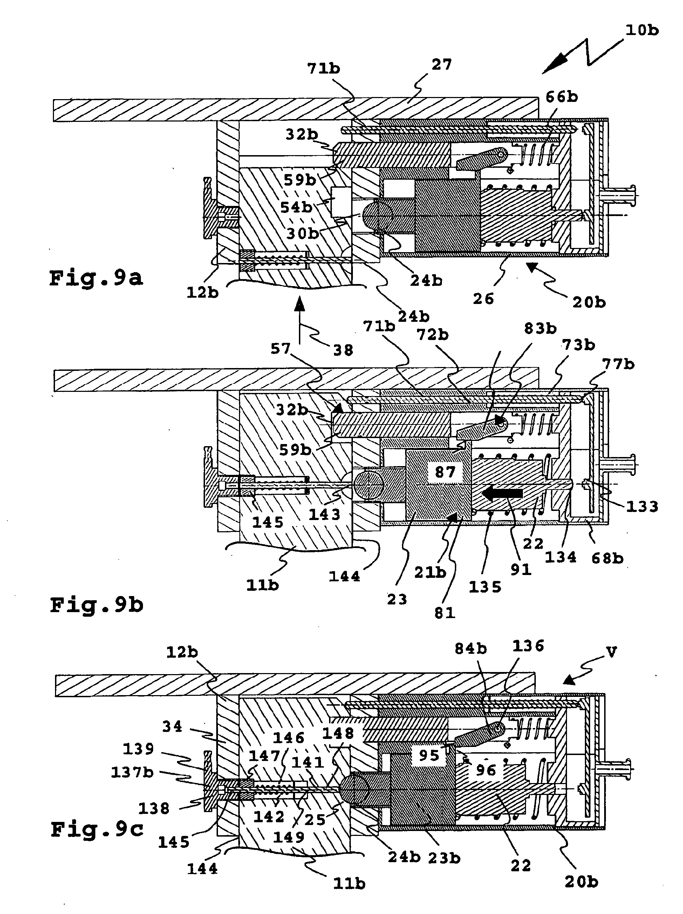

Die Verriegelungseinrichtung 20b der Anhängekupplung 10b sieht ähnlich wie die Verriegelungseinrichtung 20a eine Vorverrastung des Kupplungsarms 11b beim Einstecken in die Steckaufnahme 14 vor. Dafür ist ein Rastkörper 32b vorgesehen, der in eine korrespondierende Rastkontur oder Rastaufnahme 54b beim Einstecken des Kupplungsarms 11a einrastet. Das freie Ende des Rastkörpers 32b ist seitlich angeschrägt und gleitet an der Einführschräge oder Verdrängerschräge 55 des Kupplungsarms 11b beim Einstecken entlang (Figur 9a). Dadurch wird der Rastkörper 32b vom Kupplungsarm 11b weg in Richtung des Antriebsgehäuses 26 entgegen der Federkraft einer Federanordnung oder Feder 66b verdrängt. Mithin steht also das vordere Ende des Rastkörpers 32b dann nicht mehr in die Steckaufnahme 14 vor, so dass der Kupplungsarm 11b vollständig in die Steckaufnahme 14 einsteckbar ist (Figur 9b).

Dann rastet der Rastkörper 32b in die zugeordnete Rastaufnahme oder Rastkontur 54b am Kupplungsarm 11b ein. Hier ist zu bemerken, dass auch der Rastkörper 32b ein zusätzliches Verriegelungsmittel oder Sicherungsmittel zum Halten des Kupplungsarms 11b am Halter 12b bildet. Der Rastkörper 32b bildet einen Sicherungsbolzen 59b, also einen Sicherungskörper.

Beim Einstecken in die Steckaufnahme 14 verdrängt der Kupplungsarm 11b zudem ein Betätigungselement 71b zum Betätigen eines elektrischen Schalters 77b, mit dem der Verriegelungsantrieb 21b zu der Verriegelungsbewegung 91 in Richtung der Verriegelungsstellung V ansteuerbar ist. Im Unterschied zu der Verriegelungseinrichtung 20a ist das Betätigungselement 71 unabhängig vom Rastkörper 32b am Antriebsgehäuse 26 beweglich gelagert. Das Betätigungselement 71b umfasst einen Taststößel 72b, der oberhalb des Sicherungsbolzens 59b im Antriebsgehäuse 26 beweglich gelagert ist. Der Taststößel 72b ist durch eine Feder oder Federanordnung 73b in seine Nichtbetätigungsstellung vorbelastet, in der er in die Steckaufnahme 14 vorsteht (Figur 9a).

Wenn das Betätigungselement 71b betätigt ist (Figur 9b), stellt ein hinteres Ende des Taststößels 72b einen elektrischen Kontakt zu einer Verbindungsbrücke 133 her. Die Verbindungsbrücke 133 ist in einem Kontaktgehäuse oder Steuerungsgehäuse 68b im hinteren, von der Steckaufnahme 14 entfernten Bereich des Antriebsgehäuses 26 angeordnet. Das Steuerungsgehäuse 68b schützt die elektrischen Kontakte der Verriegelungseinrichtung 20b. Die Verbindungsbrücke 133 steht in Verbindung mit einem elektrischen Kontakt 134 des Verriegelungsmotors 22, wenn dieser in seiner hinteren, einer Entriegelungsstellung entsprechenden Stellung ist (Figur 9a).

Erhält der Verriegelungsmotor 22 von dem elektrischen Schalter 77b einen Startimpuls, setzt er sich in Richtung der Verriegelungsstellung V in Bewegung (Figur 9b). Dabei wird der Verriegelungsmotor 22 von einer Federanordnung 135 unterstützt, die den Verriegelungsantrieb 21b in Richtung der Verriegelungsstellung V belastet. Die Federanordnung 135 umfasst eine Schraubenfeder, die sich einerseits am Antriebsgehäuse 26, insbesondere dem Steuerungsgehäuse 68b, abstützt und andererseits am Getriebegehäuse 81 des Spanngetriebes 23a. Der Verriegelungsmotor 22 ist im Innenraum der Federanordnung 135 angeordnet.

Bei der Verriegelungsbewegung 91 gleitet eine Klinke 84b einer Mitnahmeeinrichtung 83b mit ihrer Gleitfläche 87 am Verriegelungsantrieb 21b entlang. Die Klinke 84b ist schwenkbeweglich am Sicherungsbolzen 59 mittels eines Schwenklagers 136 gelagert. Wenn der Verriegelungsantrieb 21b die Verriegelungsstellung V erreicht hat (Figur 9c), schwenkt die Klinke 84b in eine Mitnahme-Kopplungsstellung, bei der eine Mitnehmerfläche 95 an einem Mitnahmeanschlag 96 des Verriegelungsantriebs 21b anschlägt. Der Mitnahmeanschlag 96 ist beispielsweise an einem Anschlagvorsprung, der vor das Getriebegehäuse 81 in Richtung des Rastkörpers 32b vorsteht, vorgesehen.

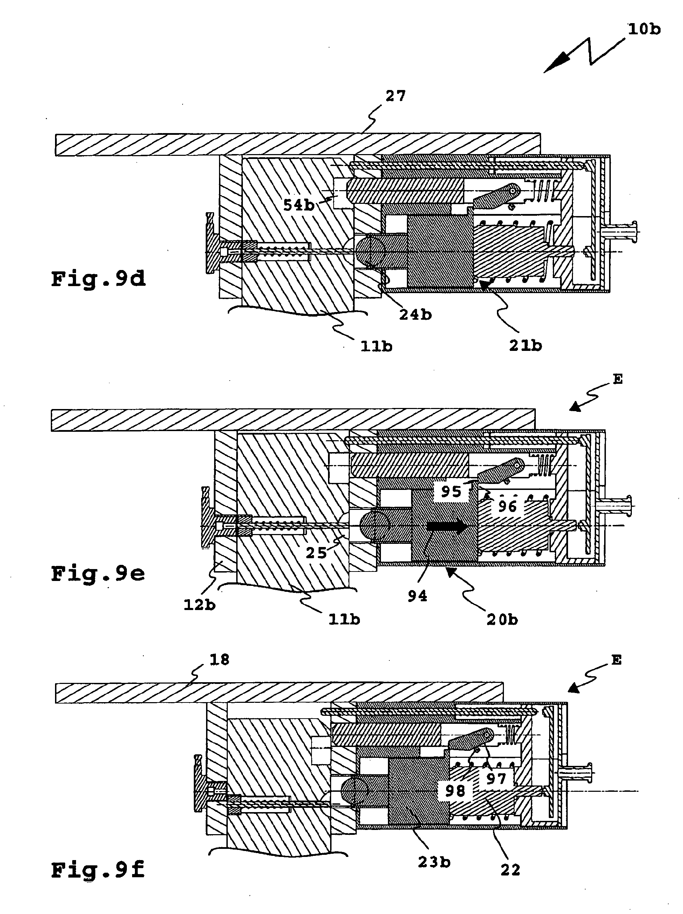

Bei einer Entriegelung der Verriegelungseinrichtung 20b nimmt der Verriegelungsantrieb 21b den Rastkörper 32b in seine Freigabestellung mit (Figuren 9d, 9e), wobei die Mitnehmerfläche 95 am Mitnahmeanschlag 96 anliegt. Am Ende der Entriegelungsbewegung 94 schlägt die Klinke 84b mit einer Freigabeanschlagfläche 97 an einem im Antriebsgehäuse 26 ortsfesten Freigabeanschlag 98 an, beispielsweise an einem quer zum Sicherungsbolzen 59 verlaufenden Stift, so dass die Klinke 84b vom Verriegelungsantrieb 21b wegschwenkt und die Mitnahmekopplung aufgehoben ist (Figur 9f).

Ob eine Verriegelung der Verriegelungseinrichtung 20b erfolgreich oder nicht erfolgreich ist, könnte beispielsweise durch ein Wegmesssystem mit einem Positionssensor erfasst werden, der im Antriebsgehäuse 26 angeordnet ist. Der Positionssensor erfasst beispielsweise die Verriegelungsstellung V, wenn der Verriegelungsantrieb 21b nach ganz vorne verfahren ist (Figur 9c). In Verbindung mit der sozusagen zweiten, redundanten Verriegelung mittels des Sicherungsbolzens 59b, der sozusagen einen zweiten Verriegelungsbolzen darstellt, würde diese Maßnahme an sich bereits eine hohe Sicherheit bieten.

Man könnte als zusätzliche Maßnahme noch vorsehen, dass bei der Verriegelungseinrichtung 20b eine Steuerung, z.B. eine vorteilhaft vorgesehene Steuerung in der Art der Steuerung 69, zudem überprüft, ob der Schalter 77b betätigt ist, wenn der Verriegelungsantrieb 21b in seiner Verriegelungsstellung V ist. Anhand dieser beiden Bedingungen wäre mit hoher Zuverlässigkeit sichergestellt, dass der Kupplungsarm 11b tatsächlich und vollständig in die Steckaufnahme 14 gesteckt ist (Figur 9b) und der Verriegelungsantrieb 21b in seiner Verriegelungsstellung V nicht sozusagen ins Leere läuft, sondern den Kupplungsarm 11b verriegelt (Figur 9c).

Bei der Anhängekupplung 10b ist jedoch ein anderes, noch höhere Verriegelungssicherheit ermittelndes Sensorkonzept verwirklicht:

Die Anhängekupplung 10b weist einen Formschluss-Sensor 137b zur Erfassung eines Formschlusses zwischen dem Formschlusselement 24b und der Formschlusskontur 25 auf. Der Formschluss-Sensor 137b umfasst einen am Halter 12b angeordneten Schalter. Der Schalter 138 ist zweckmäßigerweise in einem ihn mantelnden und kapselnden Schaltergehäuse 139 aufgenommen. Das Schaltergehäuse 139 ist beispielsweise in eine Bohrung der Seitenwand 34 eingesteckt, die der Verriegelungseinrichtung 20b gegenüberliegt. Der Formschluss-Sensor 137b ist beispielsweise mittels einer Verbindungsleitung 140 mit einer im Antriebsgehäuse 26 der Verriegelungseinrichtung 20b angeordneten Steuerung, zweckmäßigerweise in der Art der Steuerung 69, verbunden. Diese Steuerung wertet ein Formschluss-Signal des Formschluss-Sensors 137b aus, das dieser in Abhängigkeit eines Formschlusses zwischen dem Formschlusselement 24b und der Formschlusskontur 25 erzeugt.

Nunmehr ist es beispielsweise möglich, einen Formschluss-Sensor unmittelbar an der Formschlusskontur 25 anzuordnen, beispielsweise einen Mikroschalter, ein induktives oder kapazitives Messglied oder dergleichen, der oder das z.B. mittels einer Drahtlosverbindung oder Leitungsverbindung mit der zugeordneten Steuerung der Verriegelungseinrichtung und/oder einem Bordnetz des Kraftfahrzeugs verbunden ist. Beispielsweise kommuniziert ein optionaler Formschluss-Sensor 137a drahtgebunden mit der Steuerung 69 über eine Leitung 203 und bei gestecktem Kupplungsarm einander gegenüberliegenden und sich berührenden Kontaktflächen 204 am Kupplungsarm 11a und am 12a Halter und (Figur 6d).

Ferner ist eine drahtlose Kommunikation, z.B. per Funk, Infrarot, über Lichtleiter oder dergleichen, bei einem Formschluss-Sensor vorteilhaft. Beispielsweise ist eine drahtlose Kommunikation bei einem Formschluss-Sensor 137c der Anhängekupplung 11c realisiert.

Weiter kann auch am oder im beweglichen Formschlusselement ein Formschluss-Sensor vorgesehen sein, wie z.B. in Gestalt von Formschluss-Sensoren 137d, und 137e, die drahtlos oder drahtgebunden mit einer Einrichtung des Kraftfahrzeugs 19 und/oder einer optional zugeordneten Steuerung 69 der jeweiligen Anhängekupplung oder Verriegelungseinrichtung kommunizieren. Bei den Anhängekupplungen 10f und 10g sind optional Formschluss-Sensoren 137f und 137g vorgesehen, die vorzugsweise induktiv arbeiten und drahtlos kommunizieren. Ein induktiver oder ein kapazitiver Formschluss-Sensor kann z.B. eine Veränderung des magnetischen oder elektrischen Feldes erkennen, das abhängig davon ist, ob das Formschlusselement in der Formschlusskontur, insbesondere der Formschlussaufnahme, angeordnet ist. Der Formschluss-Sensor muss dann nicht unmittelbar an der Kontaktfläche zwischen Formschlusselement und Formschlusskontur sein, sondern kann auch etwas seitlich und/oder beabstandet sein, wie beispielsweise der Formschluss-Sensor 137f.

Bei der Verriegelungseinrichtung 20b ist hingegen ein anderes Formschluss-Sensor-Konzept vorgesehen, bei dem am Kupplungsarm 11b keine elektrischen Komponenten nötig sind.

Das Formschlusselement 24b verdrängt beim Einfahren in die Formschlusskontur 25 ein Tastelement 141, das in seinem unbetätigten Zustand vor den Formschlusskontur 25 vorsteht, in Richtung des Formschluss-Sensors 137b. Das Tastelement 141 bildet sozusagen eine Betätigungsstange oder einen Stößel. Das Tastelement 141 ist beweglich, vorliegend schiebebeweglich, am oder im Kupplungsarm 11b gelagert. Ein Tastende 143 zur Betätigung durch das Formschlusselement 24b steht im unbetätigten Zustand in die Formschlussaufnahme der Formschlusskontur 25 vor, jedoch nur so weit, dass es nicht vor eine Außenkontur 144 des Kupplungsarms 11b vorsteht und beispielsweise ein Einstecken in die Steckaufnahme 14 verhindern würde oder dabei beschädigt werden könnte.

Auch ein Betätigungsende 145 des Tastelements 141 steht im unbetätigten Zustand nicht vor die Außenkontur 144 des Kupplungsarms 11b vor (Figuren 9a, 9b). Wenn das Tastelement 141 jedoch aus der Formschlusskontur 25 herausbewegt wird, das heißt bei einer Betätigung durch das Formschlusselement 24b, steht das Betätigungsende 145 vor die Außenkontur 144 vor und betätigt den Formschluss-Sensor 137b. Das Betätigungsende 145 dringt dabei beispielsweise in das Schaltergehäuse 139 ein. Es versteht sich, dass auch eine andere Konfiguration getroffen sein könnte, bei der das Betätigungsende 145 beispielsweise im unbetätigten Zustand des Tastelements 141 hinter der Außenkontur 144 angeordnet ist und im betätigten Zustand nur bis zur Außenkontur 144 vorsteht, um beispielsweise einen elektrischen Kontakt an der Innenseite der Seitenwand 34 zu betätigen.

Das Tastelement 141 ist in einem Führungskanal 148 des Kupplungsarms 11b linear beweglich gelagert. Der Führungskanal 148 verläuft in der Nähe der Formschlusskontur 25. An seinem anderen Endbereich wird das Tastelement 141 durch eine Bohrung an einem Deckel 147 geführt, der eine Federkammer 146 verschließt, in der die Federanordnung 142 angeordnet ist. Die Federanordnung 142 stützt sich einerseits am Deckel 147 und andererseits am Tastelement 141 ab.

Man könnte einen mittleren Bereich des stangenartigen Tastelements 141 auch als ein Koppelglied 149 zur Kopplung des Betätigungsendes 145 und des Tastendes 143 bezeichnen.

Die Außenkontur 144 könnte man auch als eine Gleitkontur bezeichnen, mit der der Kupplungsarm 11b in die Steckaufnahme 14 gleitet.

Ein mittels des Formschluss-Sensors 137b ermittelter oder nicht vorhandener Formschluss wird von der Anhängekupplung 10b zweckmäßigerweise signalisiert. Beispielsweise steuert die Steuerung 69 dazu die Funktionsanzeigeeinrichtungen 116a-116c oder die Display-Funktionsanzeigeeinrichtung 119 an. Es ist auch möglich, dass die Steuerung 69 beispielsweise überprüft, ob nach Einschalten des Verriegelungsantriebs 21b in Richtung der Verriegelungsstellung V der Formschluss innerhalb einer vorbestimmten Zeitspanne erreicht ist. Wenn innerhalb dieser vorbestimmten Zeitspanne, beispielsweise 10 Sekunden, von dem Formschluss-Sensor 137b kein Formschluss gemeldet wird, gibt die Steuerung 69 eine Warnung aus, beispielsweise an die vorgenannten optischen Funktionsanzeigeeinrichtungen oder auch als Warnton an die akustische Funktionsanzeigeeinrichtung 117.

Ein Vorteil der Verriegelungseinrichtung 20a ist es, dass sie sowohl eine motorische Verriegelung mittels des Verriegelungsantriebs 21a als auch eine zusätzliche Rast-Verriegelung mit dem Sicherungsbolzen 59 integral in einer Baueinheit vereinigt, die zweckmäßigerweise im Antriebsgehäuse 26 angeordnet ist. Am Kupplungsarm 11a sind keine beweglichen Komponenten vorgesehen, so dass dieser einfach herstellbar und robust beim Gebrauch ist.

Alternativ ist es aber ohne weiteres möglich, bewegliche Verriegelungsmittel oder Rastmittel zumindest teilweise an einem Kupplungsarm anzuordnen. Dies ist beispielsweise bei der Anhängekupplung 10c realisiert. Eine Verriegelungseinrichtung 20c enthält einen an einem Halter 12c angeordneten Verriegelungsmotor 22 sowie ein Spanngetriebe 23c, beispielsweise ein Spindel-Mutter-Getriebe. Ein Formschlusselement 24c greift in seiner Verriegelungsstellung V in eine Formschlussaufnahme, beispielsweise eine Kugelkalotte oder einen Ring, am Kupplungsarm 11c ein, was in der Zeichnung dargestellt ist. Der Verriegelungsantrieb 21c ist integral am Halter 12c angeordnet. Ein separates Antriebsgehäuse gemäß dem vorher erläuterten modularen Konzept ist bei dieser Variante also nicht vorgesehen.

Der Kupplungsarm 11c verrastet beim Einstecken in die Steckaufnahme 14 selbsttätig, so dass ihn der Bediener nach dem Einstecken nicht mehr halten muss, bis der Verriegelungsantrieb 21c den Kupplungsarm 11c am Halter 12c festspannt. Für diese Haltefunktion sind Haltemittel 56 vorgesehen, die durch Rastmittel 57 gebildet sind.

Am Kupplungsarm 11c ist ein Rastkörper 32c in einer Lageraufnahme 160 beweglich, vorliegend schiebebeweglich gelagert. Der Rastkörper 32c ist durch eine Feder 161 belastet, die sich an einem geschlossenen Endbereich der Lageraufnahme 160 einerseits und am in die Lageraufnahme 160 eingesteckten Ende des Rastkörpers 32c abstützt. Der Rastkörper 32c steht im unbetätigten Zustand vor einen Außenumfang des Kupplungsarms 11c, der im Übrigen nicht polygonal sein muss, sondern beispielsweise auch eine runde oder elliptische Außenkontur aufweisen könnte, vor. Beim Einstecken in die Steckaufnahme 14 gleitet ein freies Ende des Rastkörpers 32c beispielsweise an einer Einführschräge 162 an einer Einführöffnung der Steckaufnahme 14 entlang und wird so nach radial innen in die Lageraufnahme 160 verdrängt, so dass der Rastkörper 32c nicht mehr vor die Außenkontur 144 vorsteht.

Allerdings kann der Rastkörper 32c auch durch eine Freigabe-Halteeinrichtung 163 in seiner Freigabestellung gehalten werden, in der er nicht vor die Außenkontur 144 vorsteht und die Einführschräge 162 nicht nötig ist. Ein Rastelement 164 der Freigabe-Halteeinrichtung 163 ist in einer Lageraufnahme 165 beweglich gelagert und durch eine Feder 166 in eine den Rastkörper 32c bezüglich des Kupplungsarms 11c verrastende Raststellung belastet. Prinzipiell wäre es möglich, ein Rastelement einer Freigabeeinrichtung beispielsweise unmittelbar am Armkörper eines Kupplungsarms anzuordnen. Beim Kupplungsarm 11c ist jedoch die umgekehrte Konfiguration getroffen, bei der die Lageraufnahme 165 und das Rastelement 164 am Rastkörper 32c vorgesehen sind. Die Lageraufnahme 165 verläuft winkelig, vorliegend rechtwinkelig, zu der Lageraufnahme 160 für den Rastkörper 32c. Somit ist das Rastelement 164 quer zur Bewegungsrichtung des Rastkörpers 32c beweglich und wirksam.

Wenn der Rastkörper 32c hinter die Außenkontur 144 verschoben ist und sein freies Ende nicht mehr vor diese vorsteht, rastet das Rastelement 164 in eine Rastaufnahme ein. Diese Rastaufnahme vorzugsweise an einem Führungskanal 168 für einen Auslöser 169 vorgesehen, der zum Auslösen und Freigeben des Rastkörpers 32c in Richtung seiner Raststellung dient. Der Führungskanal 168 und die Lageraufnahme 160 für den Rastkörper 32c sind zueinander winkelig, beispielsweise rechtwinkelig (Schrägstellungen wären möglich). Beim Einstekken des Kupplungsarms 11c schlägt der als Auslöserstift ausgestaltete Auslöser 169 an eine Wand der Steckaufnahme 14, beispielsweise eine obere Stirnwand des Halters 12c, an und verdrängt das Rastelement 164 aus seinem Rasteingriff mit der Rastaufnahme am Führungskanal 170. Dadurch kommt der Rastkörper 32c frei und kann in die als Rastaufnahme ausgebildete Rastkontur 54c des Halters 12c einrasten. Der Bediener muss den Kupplungsarm 11c für die anschließende motorische Verriegelung dann nicht mehr festhalten.

Zudem bildet der Rastkörper 32c einen Sicherungskörper, beispielsweise einen Sicherungsbolzen 59c, der den Kupplungsarm 11c unabhängig von der motorischen Verriegelung sicher, zumindest für einen Notbetrieb, am Halter 12c verriegelt.

Ein Lösen des Rasteingriffs des Rastkörpers 32c ist mittels einer mit dem Verriegelungsantrieb 21c gekoppelten Mitnahmeeinrichtung 83c auf einfache Weise möglich:

Die Rastaufnahme oder Rastkontur 54c bildet das vordere Ende eines Führungskanals 170, in dem ein Verdrängerkörper 171 der Mitnahmeeinrichtung 83c beweglich gelagert ist. Der Führungskanal 170 und die Lageraufnahme 160 liegen einander gegenüber, wenn der Kupplungsarm 11c in die Steckaufnahme 14 gesteckt ist. Der Führungskanal 170 verläuft parallel zu einem Führungskanal 30c für das Formschlusselement 24c.

Das Formschlusselement 24c und der beispielsweise als Verdrängerbolzen ausgestaltete Verdrängerkörper 171 sind durch ein Mitnahmegetriebe, vorzugsweise ein Umlenkgetriebe, miteinander gekoppelt. Das Mitnahmegetriebe umfasst beispielsweise einen als einen Schwenkhebel ausgestalteten Mitnehmer 172. Der Mitnehmer 172 ist bezüglich des Halters 12c an einem Lager 173 beweglich, insbesondere einem Schwenklager schwenkbeweglich, gelagert. Das Lager 173 ist zwischen dem Verdrängerkörper 171 und dem Verriegelungsantrieb 21c beziehungsweise dem von diesem betätigten Formschlusselement 24c angeordnet. Von dem Lager 173 abstehende Arme des als Schwenkhebel ausgestalteten Mitnehmers 172 sind mit dem Verdrängerkörper 171 und dem Formschlusselement 24c (oder einem dieses tragenden Formschlusselement-Träger) schwenkbeweglich gekoppelt. Beispielsweise greifen Lagervorsprünge 174 am Verdrängerkörper 171 und am Formschlusselement 24c in Lageraufnahmen an dem Mitnehmer 172 ein, die vorzugsweise als Langlöcher 175 ausgestaltet sind.

Bei einer Entriegelungsbewegung 94 des Verriegelungsantriebs 21c schwenkt der Mitnehmer 172 derart, dass er den Verdrängerkörper 171 in Richtung der Steckaufnahme 14 mitnimmt, wobei der Verdrängerkörper 171 den Rastkörper 32c aus der Rastaufnahme oder Rastkontur 54c verdrängt. Dann kommt der Kupplungsarm 11c aus dem Rasteingriff mit dem Halter 12c frei und kann aus der Steckaufnahme 14 entnommen werden. Das Mitnahmegetriebe bewirkt eine Bewegungsumkehr einer Entriegelungsbewegung des Verriegelungsantriebs 21c bezüglich des Verdrängerkörpers 171.

Auch bei der Anhängekupplung 10c ist die Bewegungskinematik vorteilhaft so getroffen, dass zunächst der Formschluss 24c, 25 aufgehoben wird, bevor die Rastverbindung 32c, 54c aufgehoben wird.

Ein Verrasten und Halten eines Kupplungsarms an einer Steckaufnahme vor der jeweiligen motorischen Verriegelung und zweckmäßigerweise motorischen Verspannung bietet zwar vorzugsweise eine zusätzliche Sicherheitsfunktion, zum Beispiel eine redundante mechanische Verriegelung, wie bei den vorstehenden Ausführungsbeispielen. Im Prinzip ist der Bedienkomfort aber auch mit Rastmitteln realisierbar, die lediglich eine Art Vorverrastung des Kupplungsarms in der Steckaufnahme ermöglichen. Dies ist bei den Anhängekupplungen 10d und 10e realisiert. Eine Haltekraft ihrer Haltemittel 56 ist nämlich so bemessen, dass sie gerade ausreicht, den Kupplungsarm 11d, 11e am Halter 12d, 12e zu halten, bis die motorische Verriegelung wirksam ist. Ein Zugbetrieb ist jedoch nicht möglich. Wenn auf den jeweils verrasteten Kupplungsarm 11d, 11e der Anhänger 17 aufgelastet wird, gelangen die Rastmittel 57 jeweils außer Eingriff, das heißt, der Kupplungsarm 11d, 11e ist durch Belastung durch den Anhänger 17 aus der Steckaufnahme 14 ausziehbar. Der Bedienkomfort beim motorischen Verriegeln ist jedoch nach wie vor vorhanden.

Bei der Anhängekupplung 10d sind Rastkörper 32d beweglich an Lageraufnahmen 176d am Halter 12d gelagert. Die Rastkörper 32d sind in ihre Raststellung durch Federn 177 belastet, die in den taschenartigen Lageraufnahmen 176d angeordnet sind. Die Rastkontur 54d ist am Kupplungsarm 11d vorgesehen und wird beispielsweise durch eine Rinne gebildet. Exemplarisch sind zwei einander gegenüberliegende Rastkörper 32d gezeigt, wobei auch weniger oder mehr Rastkörper an dem Halter 12d vorgesehen sein könnten.

Zum Schalten des Verriegelungsantriebs 21d, insbesondere zum Einschalten in Richtung der Verriegelungsstellung V, ist ein Schalter 178 im Bereich der Steckaufnahme 14 vorgesehen, beispielsweise an deren stirnseitigem Ende, der durch den Kupplungsarm 11d, insbesondere einen vor diesen vorstehenden Betätigungsvorsprung, betätigbar ist.

Bei der Anhängekupplung 10e ist der Rastkörper 32e beweglich am Kupplungsarm 11e angeordnet, nämlich in einer Lageraufnahme 176e. Auch der Rastkörper 32e ist durch eine Feder 177 in seine Raststellung belastet, in der er in eine Rastaufnahme 54e, beispielsweise einer Kugelkalotte oder einer ringförmigen Aufnahme, einrastet.

Eine Anhängekupplung 10f baut besonders kompakt, ist aber gemäß der Erfindung motorisch verriegelbar und/oder entriegelbar und weist zudem Haltemittel auf, die einen Kupplungsarm 11f nach dem Einstecken in eine Steckaufnahme 14 eines Halters 12f für eine motorische Verriegelung bereit halten. Die Steckaufnahme 14 ist im Innenraum eines hülsenartigen Aufnahmeabschnitts 180 des Halters 12a vorgesehen, vor den kragenartig ein Halterstützflansch 181 vorsteht, dessen von der Steckaufnahme 14 wegweisende, in der Zeichnung untere Fläche einen Halter-Anschlag 182 für einen Kupplungsarm-Anschlag 183 des Kupplungsarms 11f bildet. Der Kupplungsarm-Anschlag 183 ist an einem Kupplungsarm-Stützflansch 184 unterhalb des Steckendes 13 angeordnet. Der Kupplungsarm-Stützflansch 184 steht kragenförmig vor das Steckende 13 vor. Durch die flanschartige Ausgestaltung der Anschläge 182, 183 stützt sich der Kupplungsarm 11f im in die Steckaufnahme 14 eingesteckten Zustand großflächig am Halter 12f ab, was für einen sicheren Halt sorgt. Zudem ist eine Verdrehsicherung im Bereich der großflächigen Anschläge 182, 183 vorgesehen, wobei Formschlussvorsprünge am einen Anschlag in Formschlussaufnahmen am anderen Anschlag eingreifen. Die Vorsprünge sind beispielsweise durch Kugeln 185 am Kupplungsarm-Anschlag 183 gebildet, die in zugeordnete Kugelkalotten 186 am Halter-Anschlag 182 formschlüssig eingreifen.

Durch die großflächigen Flansche 181, 184, die vorzugsweise kreisförmig sind und einen Durchmesser haben, der vorzugsweise mindestens etwa gleich einer Länge des Steckendes 13 beziehungsweise der Steckaufnahme 14 ist (vorzugsweise sogar größer), ist es möglich, dass die Anhängekupplung 10f verhältnismäßig kurz baut. Das Steckende 13 und die Steckaufnahme 14 sind im Verhältnis zu den Flanschen 181, 184 kurz. Beispielsweise entspricht eine Länge des Steckendes 13 etwa dem 0,7- bis 1,5-fachen Durchmesser des Kupplungsarm-Stützflansches 184. Beim Halter 12f sind die Verhältnisse Steckaufnahme-Flansch vorteilhaft ähnlich. Jedenfalls ist es zweckmäßig, dass die Stützflansche 181, 184 korrespondierende Außenumfänge, insbesondere dieselben Durchmesser, aufweisen.

Wenn der Kupplungsarm 11f in den Halter 12f gesteckt ist, liegen die Anschläge 182, 183 im Wesentlichen flächig aneinander an. Dadurch ist eine großflächige Abstützung gegeben. Ferner ist dann eine federbelastete und/oder manuelle und/oder motorische Verriegelung des Kupplungsarms 11f am Halter 12f mittels der Verriegelungseinrichtung 20f möglich.

Die Verriegelungseinrichtung 20f umfasst einen Verriegelungsring 187 zur Betätigung von mindestens einem Formschlusselement 24f, vorzugsweise zwei oder drei Formschlusselementen 24f, das oder die in Führungskanälen 30f am Aufnahmeabschnitt 180 beweglich zwischen einer Verriegelungsstellung V, bei der sie in Formschlussaufnahmen oder Formschlusskonturen 25 am Kupplungsarm eingreifen, und einer Entriegelungsstellung E sind, in der die Formschlusselemente 24f außer Eingriff mit der Formschlusskontur oder den Formschlusskonturen 25 sind.

In der Entriegelungsstellung E können die Formschlusselemente 24f aus dem Bereich der Steckaufnahme 14 nach radial außen herausbewegt werden und in eine Freigabeausnehmung 189 im Innenraum des Verriegelungsrings 187 eingreifen. Der Verriegelungsring 187 ist schiebebeweglich am Aufnahmeabschnitt 180 gelagert. Der Verriegelungsring 187 wird vom Aufnahmeabschnitt 180 durchdrungen. Der Verriegelungsring 187 ist durch eine Feder 190 in seine Verriegelungsstellung belastet. Die Feder 190 ist eine Druckfeder, die sich am Verriegelungsring 187 und am Halter-Stützflansch 181 abstützt.

An sich sorgt die Feder 190 für eine automatische Verriegelung des Kupplungsarms 11f am Halter 12f. Die Feder 190 drückt nämlich den Verriegelungsring 187 vom Halter-Stützflansch 181 in seine Verriegelungsstellung V weg. Dann wird das mindestens eine Formschlusselement 24f durch eine Verriegelungsschräge 191 im Innern des Verriegelungsrings 187 durch den zugeordneten Führungskanal 30f hindurch in die Formschlussaufnahme oder -kontur 25 gedrückt, um den Kupplungsarm 11f formschlüssig zu halten. Die Verriegelungsschräge 191 schließt sich an die taschenartig erweiterte Freigabeausnehmung 189 an.

Nun wäre es prinzipiell möglich, den Verriegelungsring 187 manuell zu betätigen, vorteilhaft nur zur Entriegelung, gegebenenfalls aber auch zur Verriegelung. Man könnte beispielsweise einen Seilzug oder einen Betätigungsarm für den Verriegelungsring 187 vorsehen, der unter den Stoßfänger 43 vorragt und von einem Bediener ergriffen werden kann.

Zur Entriegelung könnte ein Bediener den Verriegelungsring 187 gegen die Kraft der Feder 190 in seine Entriegelungsstellung E drücken.

Bei der Anhängekupplung 11f ist jedoch ein anderes Bedienkonzept in einer motorischen Entriegelung, zweckmäßigerweise auch Verriegelung, vorgesehen:

Ein Verriegelungsantrieb 21f mit einem Verriegelungsmotor 22 treibt über ein Spanngetriebe 23f den Verriegelungsring 187 zwischen seiner Verriegelungsstellung V und seiner Entriegelungsstellung E an. Das Spanngetriebe 23f umfasst eine am Verriegelungsring 187 angeordnete Zahnung 192, mit der eine Schnecke 193, die zugleich eine Abtriebswelle des Verriegelungsmotors 22 bildet, kämmt. Die Schnecke 193 und die Zahnung 192 sind zweckmäßigerweise selbsthemmend. Der Verriegelungsantrieb 21f kann den Verriegelungsring 187 mit großer Kraft in seine Verriegelungsstellung V betätigen, wodurch der Kupplungsarm 11f am Halter 12f fest verspannbar ist.

Der Verriegelungsantrieb 21f bewegt den Verriegelungsring 187 linear auf und ab. Alternativ könnte auch eine Drehverriegelung mit einem Verriegelungsring 194 vorgesehen sein. Man könnte den Verriegelungsring 194 anstelle des Verriegelungsrings 187 verwenden, wobei der Verriegelungsring 194 dann drehbeweglich am Halter 12f gelagert wäre. Im Innenraum des Verriegelungsrings 194 ist mindestens eine dem Formschlusselement 24f zugeordnete eine Spannkulisse 195 mit einem schrägen Verlauf oder alternativ (nicht dargestellt) ein Spanngewinde, eine exzentrische Kontur oder dergleichen, angeordnet. Durch Drehen des Verriegelungsrings 194 wandert das Formschlusselement 24f an der Spannkulisse 195 entlang, um so zwischen der Verriegelungsstellung V und der Entriegelungsstellung E betätigt zu werden.

Bei einer Drehbetätigung des Verriegelungsrings 195 verlagert die Spannkulisse 195 oder eine sonstige Spannkontur das ihr jeweils zugeordnete Formschlusselement 24f nach radial innen oder lässt eine Bewegung nach radial außen zu.

Für einen Drehantrieb des Verriegelungsrings 194 kann an dessen Außenseite beispielsweise eine Verzahnung 196 vorgesehen sein. Wenn die Zähne der Verzahnung 196 parallel zur Längserstreckungsrichtung des Verriegelungsrings 194 verlaufen, könnte man beispielsweise den Verriegelungsantrieb 21f in im Wesentlichen horizontaler Stellung zur Betätigung des Verriegelungsrings 194 vorsehen, was eine besonders platzsparende Anordnung ist. In der Zeichnung ist eine Zahnung 196, z.B. eine Vertikal - oder Schrägzahnung, dargestellt, so dass man einen in der Zeichnung nicht dargestellten Verriegelungsantrieb beispielsweise auch winkelig zum Verriegelungsring 194 positionieren könnte.

Auch bei der Anhängekupplung 10f ist eine Vorverrastung mit Formschlusselementen 24f vorgesehen, die in eine ringförmige Rastkontur 54f am freien Ende des Steckendes 13 eingreifen. Die Formschlusselemente 24f sind nur schematisch dargestellt.

Zum Halten des Kupplungsarms 11f am Halter 12f, bis die motorische Verriegelungseinrichtung 20c ihn verriegelt, könnte auch beispielsweise ein Magnet 197, zum Beispiel ein Ringmagnet, vorgesehen sein.

Bei einer Anhängekupplung 10g ist das erfindungsgemäße Konzept, ein Formschlusselement 24g sozusagen tangential in eine Formschlusskontur 25 an einem Kupplungsarm 11g einzupressen oder einzuspannen, ebenfalls realisiert. Ein Verriegelungsmotor 22 eines Verriegelungsantriebs 21g betätigt über ein Spanngetriebe 23g einen Verdrängerkörper 198, an dem eine Spannschräge 199 für das Formschlusselement 24g, das zweckmäßigerweise eine Kugel ist, angeordnet ist. Der Verdrängerkörper 198 ist bolzenartig. Das Spanngetriebe 23g umfasst eine Spindel 200, die eine Abtriebswelle des Verriegelungsmotors 22 bildet, sowie ein Innengewinde am Verdrängerkörper 198, in den die Spindel 200 eingespannt ist.

Der Verdrängerkörper 198 ist in einem Führungsgehäuse 201 geführt, das seitlich, insbesondere tangential, an einem Haltergehäuse 15g des Halters 12g angeordnet ist. Der Verdrängerkörper 198 ist durch eine Feder 202 in seine Entriegelungsstellung E federbelastet. Zum Verriegeln des Kupplungsarms 11g schiebt der Verriegelungsmotor 22 durch das als ein Lineargetriebe ausgestaltete Spanngetriebe 23g den Verdrängerkörper 198 gegen die Kraft der Feder 202, wobei die Spannschräge 199 das Formschlusselement 24g in die Formschlusskontur 25 presst.

Die Haltergehäuse 15c-15g können auch in der Bauart der Haltergehäuse 15a und 15b gefertigt sein, d.h. zumindest teilweise aus Plattenstücken. Vorteilhaft ist dabei z.B. eine einfache Herstellung.

Die Haltergehäuse 15c-15e, insbesondere aber auch die Haltergehäuse 15f und 15g, könnten in einer nicht dargestellten Abwandlung auch Steckaufnahmen mit zumindest teilweise polygonaler Querschnittskontur haben. Dann sind sie beispielsweise zur Verwendung der Kupplungsarme 15a, 15b, 15h-15m geeignet.

Ferner sind Flansche in der Art der Flansche 181 und 184 auch an Haltergehäusen in der Bauart der Haltergehäuse 15a und 15b sowie an polygonalen Kupplungsarmen, z.B. in der Art der Kupplungsarme 15a, 15b, 15h-15m vorteilhaft anbringbar.

## Patentansprüche

1. Anhängekupplung (10a-10g) mit einem Halter (12a-12g) zur Befestigung an einem Kraftfahrzeug (19), insbesondere einem Personen-Kraftfahrzeug, mit einem in einer Einsteckrichtung (38) in eine Steckaufnahme (14) des Halters (12a-12g) einsteckbaren Kupplungsarm (11a-11m) zum Anhängen eines Anhängers (17), und mit einer insbesondere am Halter (12a-12g) angeordneten Verriegelungseinrichtung (20a-20g) mit einem einen Verriegelungsmotor (22) aufweisenden, mittels eines Antriebsschalters (100a, 100b) schaltbaren Verriegelungsantrieb (21a-21g) zur Betätigung der Verriegelungseinrichtung (20a-20g) zwischen einer Verriegelungsstellung (V), in der der Kupplungsarm (11a-11m) am Halter (12a-12g) verriegelt ist, und einer Entriegelungsstellung (E), in der der Kupplungsarm (11a-11m) zum Entfernen von dem Halter (12a-12g) entriegelt ist, **dadurch gekennzeichnet, dass** sie zur Betätigung des Antriebsschalters (100a, 100b) ein Betätigungselement (101a, 101b) mit einem in einem Außenbereich des Kraftfahrzeugs (19) angeordneten Bedienbereich (102) nahe der Steckaufnahme (14) aufweist.

2. Anhängekupplung nach Anspruch 1, **dadurch gekennzeichnet, dass** das Betätigungselement (101a, 101b) an einem von einem die Steckaufnahme (14) aufweisenden Haltergehäuse (15a-15g) des Halters (12a-12g) separaten Bedienteilträger (104) angeordnet ist.

3. Anhängekupplung nach Anspruch 2, **dadurch gekennzeichnet, dass** der Bedienteilträger (104) einen Steckdosenträger (105) für eine Anhänger-Steckdose (106) bildet oder an einem Steckdosenträger (105) angeordnet ist und/oder dass der Bedienteilträger (104) einen seitlich neben der Steckaufnahme (14) angeordneten oder neben dem in die Steckaufnahme (14) gesteckten Kupplungsarm (11a-11m) tangential verlaufenden Tragabschnitt (107) aufweist, an dem das Betätigungselement (101a, 101b) angeordnet ist.

4. Anhängekupplung nach einem der vorhergehenden Ansprüche, **dadurch gekennzeichnet, dass** das Betätigungselement (101a, 101b) und/oder der Antriebsschalter (100a, 100b) an einem Karosserieteil des Kraftfahrzeugs (19) oder an einem die Steckaufnahme (14) aufweisenden Haltergehäuse (15a-15g) des Halters (12a-12g) oder an einem den Halter (12a-12g) tragenden Träger (18) oder an einem Antriebsgehäuse (26) für den Verriegelungsantrieb (21a-21g) oder am Kupplungsarm (11a-11m) angeordnet sind.

5. Anhängekupplung nach einem der vorhergehenden Ansprüche, **dadurch gekennzeichnet, dass** das Betätigungselement (101a, 101b) und/oder der Antriebsschalter (100a, 100b) an einer Anhänger-Steckdose (106) zum elektrischen und/oder signal-optischen Anschluss des Anhängers (17) an das Kraftfahrzeug (19), insbesondere deren Steckdosengehäuse (108) oder deren Dosendeckel (109), oder an einem die Anhänger-Steckdose (106) tragenden Steckdosenträger (105) angeordnet ist.

6. Anhängekupplung nach einem der vorhergehenden Ansprüche, **dadurch gekennzeichnet, dass** der Antriebsschalter (100a, 100b) ein elektrischer Antriebsschalter ist und/oder dass der Antriebsschalter (100a, 100b) oder das Betätigungselement (101a, 101b) drahtlos, insbesondere magnetisch, kapazitiv, per Funk oder per Infrarotwellen, betätigbar sind und/oder das Betätigungselement (101a, 101b) oder der Antriebsschalter (100a, 100b) einen Funkempfänger (112) mit einem im wesentlichen auf den Bedienbereich (102) begrenzten Empfangsbereich (113) aufweisen, wobei vorteilhaft ein Sender (114) für den Funkempfänger (112) an einem Fahrzeugschlüssel (115) für das Kraftfahrzeug (19) oder in einem Schlüsselanhängergehäuse (125) angeordnet oder anordenbar ist.

7. Anhängekupplung nach einem der vorhergehenden Ansprüche, **dadurch gekennzeichnet, dass** der Antriebsschalter (100a, 100b) zum Auslösen einer Entriegelungsbewegung (94) des Verriegelungsantriebs (21a-21g) von der Verriegelungsstellung (V) in die Entriegelungsstellung (E) der Verriegelungseinrichtung (20a-20g) und/oder zum Auslösen einer Verriegelungsbewegung (91) von der Entriegelungsstellung (E) in die Verriegelungsstellung (V) vorgesehen ist.

8. Anhängekupplung nach einem der vorhergehenden Ansprüche, **dadurch gekennzeichnet, dass** der Antriebsschalter (100a, 100b) und/oder das Betätigungselement (101a, 101b) abhängig von einer Stellung eines Deckels, insbesondere eines Dosendeckels (109) einer Anhänger-Steckdose (106) zum elektrischen und/oder signal-optischen Anschluss des Anhängers an das Kraftfahrzeug (19), inaktivierbar oder unbetätigbar sind.

9. Anhängekupplung nach Anspruch 8, **dadurch gekennzeichnet, dass** der Dosendeckel (109) der Anhänger-Steckdose (106) in seinem offenen Zustand das Betätigungselement (101a, 101b) verdeckt, wenn ein Anhängerstecker in die Anhänger-Steckdose (106) eingesteckt ist und/oder dass die Anhänger-Steckdose (106) einen durch den Dosendeckel (109) betätigbaren Aktivierungsschalter (110) zum Aktivieren des Antriebsschalters (100a, 100b) bei geschlossenem Dosendeckel (109) und Deaktiveren des Antriebsschalters (100a, 100b) bei offenem Dosendeckel (109) aufweist.

10. Anhängekupplung nach einem der vorhergehenden Ansprüche, **dadurch gekennzeichnet, dass** der Antriebsschalter (100a, 100b) und das Betätigungselement (101a, 101b) in einem gemeinsamen Betätigungsgehäuse (103) angeordnet sind.

11. Anhängekupplung nach einem der Ansprüche 1 bis 9, **dadurch gekennzeichnet, dass** der Antriebsschalter (100a, 100b) in einem Innenraum des Kraftfahrzeugs (19) angeordnet ist oder zur Anordnung in einem Innenraum des Kraftfahrzeugs (19) vorgesehen ist, und dass zwischen dem Betätigungselement (101a, 101b) und dem Antriebsschalter (100a, 100b) mindestens ein Übertragungsglied (111) angeordnet ist, wobei zweckmäßigerweise das mindestens eine Übertragungsglied (111) fluidisch, insbesondere pneumatisch, wirkend ist und/oder vorteilhaft einen Seilzug oder einen Bowdenzug und/oder ein Übertragungsgetriebe oder Übertragungsgestänge enthält.

12. Anhängekupplung nach einem der vorhergehenden Ansprüche, **dadurch gekennzeichnet, dass** sie mindestens eine optische und/oder akustische Funktionsanzeigeeinrichtung (116a-116c; 117) für mindestens eine Funktionsanzeige der Verriegelungseinrichtung (20a-20g) aufweist und/oder mindestens einen Signalausgang (118) zur Ansteuerung einer Funktionsanzeigeeinrichtung (119) des Kraftfahrzeugs (19) aufweist.

13. Anhängekupplung nach Anspruch 12, **dadurch gekennzeichnet, dass** die mindestens eine Funktionsanzeigeeinrichtung (116a-116c; 117) in dem Bedienbereich (102) angeordnet ist und/oder dass die mindestens eine Funktionsanzeigeeinrichtung (116a-116c; 117) eine Verriegelung und/oder eine Entriegelung und/oder eine Fehlfunktion der Verriegelungseinrichtung (20a-20g) und/oder einen Fahrbetrieb des Verriegelungsantriebs (21a-21g) anzeigt und/oder dass Anzeigemittel der mindestens einen Funktionsanzeigeeinrichtung (116a-116c; 117) an einem das Betätigungselement (101a, 101b) aufnehmenden Betätigungsgehäuse (103) und/oder an einem das Betätigungselement (101a, 101b) haltenden Bedienteilträger (104) und/oder an einer Anhänger-Steckdose (106) insbesondere deren Steckdosengehäuse (108) oder deren Dosendeckel (109), und/oder einem Formschlusselement (24a-24g) oder das Formschlusselement (24a-24g) haltenden Formschlusselement-Träger (78) der Verriegelungseinrichtung (20a-20g) angeordnet sind.

14. Anhängekupplung nach einem der vorhergehenden Ansprüche, **dadurch gekennzeichnet, dass** sie, insbesondere ihre Steuerung (69), einen Schalteingang zur Inaktivierung des Antriebsschalters (100a, 100b), insbesondere bei einem Fahrbetrieb des Kraftfahrzeugs (19) und/oder bei einem aus einem Zündschloss des Kraftfahrzeugs (19) entferntem Fahrzeugschlüssel (115), und/oder zur Aktivierung des Antriebsschalters (100a, 100b) bei einer geöffneten Fahrzeugtüre oder Fahrzeugklappe des Kraftfahrzeugs (19) aufweist.

15. Anhängekupplung nach einem der vorhergehenden Ansprüche, **dadurch gekennzeichnet, dass** sie eine Steuerung (69) zur Aktivschaltung des Antriebsschalters (100a, 100b) anhand mindestens einer Auslösebedingung für ein Zeitintervall ausgestaltet ist, wobei der Verriegelungsantrieb (21a-21g) in dem Zeitintervall durch den Antriebsschalter (100a, 100b) startbar ist.

## Claims

1. Trailer coupling with a holder (12a-12g) for attaching to a motor vehicle (19), in particular a car, with a coupling arm (11a-11m), insertable in a direction of insertion (38) in a socket (14) of the holder (12a-12g) for attaching a trailer (17), and with a locking device (20a-20g), fitted in particular to the holder (12a-12g), with a locking drive (21a-21g), having a locking motor (22) and switchable by means of a drive switch (100a, 100b) for actuation of the locking device (20a-20g) between a locked position (V) in which the coupling arm (11a-11m) is locked to the holder (12a-12g) and an unlocked position (E) in which the coupling arm (11a-11m) is unlocked for removal from the holder (12a-12g), **characterised in that** it has for actuation of the drive switch (100a, 100b) an actuating element (101a, 101b) with a control area (102) located in an outer area of the motor vehicle (19) close to the socket (14).

2. Trailer coupling according to claim 1, **characterised in that** the actuating element (101a, 101b) is provided on a control part support (104) separate from a holder housing (15a-15g) of the holder (12a-12g) containing the socket (14).

3. Trailer coupling according to claim 2, **characterised in that** the control part support (104) forms a socket support (105) for a trailer socket (106) or is provided on a socket support (105) and/or that the control part support (104) has a support section (107), located to the side of the socket (14) or running tangentially next to the coupling arm (11a-11m) inserted in the socket (14), on which the actuating element (101a, 101b) is mounted.

4. Trailer coupling according to any of the preceding claims, **characterised in that** the actuating element (101 a, 101 b) and/or the drive switch (100a, 100b) are located on a vehicle body part of the motor vehicle (19) or on a holder housing (15a-15g) of the holder (12a-12g) containing the socket (14) or on a support (18) carrying the holder (12a-12g) or on a drive housing (26) for the locking drive (21a-21g) or on the coupling arm (11a-11m).

5. Trailer coupling according to any of the preceding claims, **characterised in that** the actuating element (101a, 101b) and/or the drive switch (100a, 100b) are or is located on a trailer socket (106) for the electrical and/or signal-optical connection of the trailer (17) to the motor vehicle (19), in particular on its socket housing (108) or its socket cover (109), or on a socket support (105) carrying the trailer socket (106).

6. Trailer coupling according to any of the preceding claims, **characterised in that** the drive switch (100a, 100b) is an electrical drive switch and/or that the drive switch (100a, 100b) or the actuating element (101a, 101b) may be actuated wirelessly, in particular magnetically, through capacitance, radio or infrared waves, and/or the actuating element (101 a, 101 b) or the drive switch (100a, 100b) has or have a radio receiver (112) with a reception range (113) limited substantially to the control area (102), wherein advantageously a transmitter (114) for the radio receiver (112) is or may be provided on a vehicle key (115) for the motor vehicle (19) or in a key attachment casing (125).

7. Trailer coupling according to any of the preceding claims, **characterised in that** the drive switch (100a, 100b) is provided to trigger an unlocking movement (94) of the locking drive (21 a-21 g) from the locked position (V) into the unlocked position (E) of the locking device (20a-20g) and/or to trigger a locking movement (91) from the unlocked position (E) into the locked position (V).

8. Trailer coupling according to any of the preceding claims, **characterised in that** the drive switch (100a, 100b) and/or the actuating element (101a, 101b) may be capable of being deactivated or made inoperable depending on a position of a cover, in particular a socket cover (109) of a trailer socket (106) for the electrical and/or signal-optical connection of the trailer to the motor vehicle (19).

9. Trailer coupling according to claim 8, **characterised in that** the socket cover (109) of the trailer socket (106) in its open state covers the actuating element (101a, 101b) when a trailer connector is inserted in the trailer socket (106) and/or that the trailer socket (106) has an activation switch (110) actuable by the socket cover (109) to activate the drive switch (100a, 100b) with the socket cover (109) closed, and to deactivate the drive switch (100a, 100b) with the socket cover (109) open.

10. Trailer coupling according to any of the preceding claims, **characterised in that** the drive switch (100a, 100b) and the actuating element (101 a, 101 b) are provided in a common actuation housing (103).

11. Trailer coupling according to any of claims 1 to 9, **characterised in that** the drive switch (100a, 100b) is provided in an interior of the motor vehicle (19), or is provided for location in an interior of the motor vehicle (19), and that between the actuating element (101a, 101b) and the drive switch (100a, 100b) there is provided at least one transmission element (111), wherein expediently the transmission element or elements (111) acts or act fluidically, in particular pneumatically, and/or advantageously contains or contain a wire rope or a control cable and/or a transmission gear or transmission linkage.

12. Trailer coupling according to any of the preceding claims, **characterised in that** it has at least one optical and/or acoustic function display device (116a-c; 117) for at least one function display of the locking device (20a-20g) and/or at least one signal output (118) to control a function display device (119) of the motor vehicle (19).

13. Trailer coupling according to claim 12, **characterised in that** the function display device or devices (116a-c; 117) is or are located in the control area (102) and/or that the function display device or devices (116a-c; 117) indicate locking and/or unlocking and/or a malfunction of the locking device (20a-20g) and/or operation of the locking drive (21a-21g) and/or that display means of the function display device or devices (116a-c; 117) are provided on an actuation housing (103) holding the actuating element (101 a, 101b) and/or on a control part support (104) holding the actuating element (101a, 101b), and/or on a trailer socket (106), in particular its socket housing (108) or socket cover (109), and/or an interlocking element (24a-24g) or the interlocking element carrier (78) of the locking device (20a-20g) holding the interlocking element (24a-24g).

14. Trailer coupling according to any of the preceding claims **characterised in that** it, in particular its control unit (69), has a switching input to inactivate the drive switch (100a, 100b), in particular when the motor vehicle (19) is in motion, and/or if a vehicle key (115) is removed from the ignition lock of the motor vehicle (19), and/or to activate the drive switch (100a, 100b) if vehicle doors or a vehicle tailgate of the motor vehicle (19) are or is open.

15. Trailer coupling according to any of the preceding claims, **characterised in that** it has a control unit (69) designed for active switching of the drive switch (100a, 100b) with the aid of at least one triggering condition for a time interval, wherein the locking drive (21a-21g) may be started in the time interval by the drive switch (100a, 100b).

## Revendications

1. Attelage (10a-10g) avec un support (12a-12g) pour la fixation à un véhicule automobile (19), en particulier une voiture particulière, avec un bras d'attelage (11a-11m) enfichable dans un sens d'enfichage (38) dans un logement à enfichage (14) du support (12a-12g) pour l'attelage d'une remorque (17), et avec un dispositif de verrouillage (20a-20g) agencé notamment sur le support (12a-12g) avec un entraînement de verrouillage (21a-21g) présentant un moteur de verrouillage (22), commutable à l'aide d'un commutateur d'entraînement (100a, 100b) pour l'actionnement du dispositif de verrouillage (20a-20g) entre une position de verrouillage (V), dans laquelle le bras d'attelage (11a-11m) est verrouillé sur le support (12a-12g), et une position de déverrouillage (E), dans laquelle le bras d'attelage (11a-11m) est déverrouillé pour le retrait du support (12a-12g), **caractérisé en ce qu'**il présente pour l'actionnement du commutateur d'entraînement (100a, 100b) un élément d'actionnement (101a, 101b) avec une zone de commande (102) agencée dans une zone extérieure du véhicule automobile (19) près du logement à enfichage (14).

2. Attelage selon la revendication 1, **caractérisé en ce que** l'élément d'actionnement (101a, 101b) est agencé sur un support de partie de commande (104) séparé d'un boîtier de support (15a-15g) présentant le logement à enfichage (14) du support (12a-12g).

3. Attelage selon la revendication 2, **caractérisé en ce que** le support de partie de commande (104) forme un support de prise (105) pour une prise de remorque (106) ou est agencé sur un support de prise (105) et/ou **en ce que** le support de partie de commande (104) présente une section porteuse (107) s'étendant tangentiellement à côté du bras d'attelage (11 a-11 m) enfiché dans le logement à enfichage (14) ou agencée latéralement à côté du logement à enfichage (14), sur laquelle l'élément d'actionnement (101 a, 101 b) est agencé.

4. Attelage selon l'une quelconque des revendications précédentes, **caractérisé en ce que** l'élément d'actionnement (101a, 101b) et/ou le commutateur d'entraînement (100a, 100b) est agencé sur une partie de carrosserie du véhicule automobile (19) ou sur un boîtier de support (15a-15g) présentant le logement à enfichage (14) du support (12a-12g) ou sur un élément support (18) portant le support (12a-12g) ou sur un boîtier d'entraînement (26) pour l'entraînement de verrouillage (21a-21g) ou sur le bras d'attelage (11a-11m).

5. Attelage selon l'une quelconque des revendications précédentes, **caractérisé en ce que** l'élément d'actionnement (101 a, 101b) et/ou le commutateur d'entraînement (100a, 100b) est agencé sur une prise de remorque (106) pour le raccordement électrique et/ou à signal optique de la remorque (17) au véhicule automobile (19), en particulier son boîtier de prise (108) ou son couvercle de prise (109), ou sur un support de prise (105) portant la prise de remorque (106).

6. Attelage selon l'une quelconque des revendications précédentes, **caractérisé en ce que** le commutateur d'entraînement (100a, 100b) est un commutateur d'entraînement électrique et/ou **en ce que** le commutateur d'entraînement (100a, 100b) ou l'élément d'actionnement (101a, 101b) est actionnable sans fil, notamment par voie magnétique, capacitive, par radio ou par ondes infrarouges et/ou **en ce que** l'élément d'actionnement (101a, 101b) ou le commutateur d'entraînement (100a, 100b) présente un récepteur radio (112) avec une zone de réception (113) limitée sensiblement à la zone de commande (102), un émetteur (114) pour le récepteur radio (112) étant agencé ou pouvant être agencé sur une clé de véhicule (115) pour le véhicule automobile (19) ou dans un boîtier de remorque de clé (125).

7. Attelage selon l'une quelconque des revendications précédentes, **caractérisé en ce que** le commutateur d'entraînement (100a, 100b) est prévu pour le déclenchement d'un mouvement de déverrouillage (94) de l'entraînement de verrouillage (21a-21g) de la position de verrouillage (V) à la position de déverrouillage (E) du dispositif de verrouillage (20a-20g) et/ou pour le déclenchement d'un mouvement de verrouillage (91) de la position de déverrouillage (E) à la position de verrouillage (V).

8. Attelage selon l'une quelconque des revendications précédentes, **caractérisé en ce que** le commutateur d'entraînement (100a, 100b) et/ou l'élément d'actionnement (101a, 101b) peut être inactivé ou n'est pas actionnable en fonction d'une position d'un couvercle, en particulier d'un couvercle de prise (109) d'une prise de remorque (106) pour le raccordement électrique et/ou à signal optique de la remorque au véhicule automobile (19).

9. Attelage selon la revendication 8, **caractérisé en ce que** le couvercle de prise (109) de la prise de remorque (106) cache dans son état ouvert l'élément d'actionnement (101a, 101b) lorsqu'un connecteur de remorque est enfiché dans la prise de remorque (106) et/ou **en ce que** la prise de remorque (106) présente un commutateur d'activation (110) actionnable par le couvercle de prise (109) pour l'activation du commutateur d'entraînement (100a, 100b) lorsque le couvercle de prise est fermé (109) et pour la désactivation du commutateur d'entraînement (100a, 100b) lorsque le couvercle de prise est ouvert (109).

10. Attelage selon l'une quelconque des revendications précédentes, **caractérisé en ce que** le commutateur d'entraînement (100a, 100b) et l'élément d'actionnement (101a, 101b) sont agencés dans un boîtier d'actionnement commun (103).

11. Attelage selon l'une quelconque des revendications 1 à 9, **caractérisé en ce que** le commutateur d'entraînement (100a, 100b) est agencé dans un espace intérieur du véhicule automobile (19) ou est prévu pour l'agencement dans un espace intérieur du véhicule automobile (19), et **en ce qu'**au moins un organe de transmission (111) est agencé entre l'élément d'actionnement (101a, 101b) et le commutateur d'entraînement (100a, 100b), l'au moins un organe de transmission (111) agissant de manière appropriée par voie fluidique, notamment pneumatique et/ou contenant avantageusement un câble de traction ou un câble Bowden et/ou un engrenage de transmission ou une tringle de transmission.

12. Attelage selon l'une quelconque des revendications précédentes, **caractérisé en ce qu'**il présente au moins un dispositif d'affichage fonctionnel (116a-116c; 117) optique et/ou acoustique pour au moins un affichage fonctionnel du dispositif de verrouillage (20a-20g) et/ou présente au moins une sortie de signal (118) pour la commande d'un dispositif d'affichage fonctionnel (119) du véhicule automobile (19).

13. Attelage selon la revendication 12, **caractérisé en ce que** l'au moins un dispositif d'affichage fonctionnel (116a-116c ; 117) est agencé dans la zone de commande (102) et/ou **en ce que** l'au moins un dispositif d'affichage fonctionnel (116a-116c; 117) affiche un verrouillage et/ou un déverrouillage et/ou un dysfonctionnement du dispositif de verrouillage (20a-20g) et/ou un mode de marche de l'entraînement de verrouillage (21a-21g) et/ou **en ce que** des moyens d'affichage de l'au moins un dispositif d'affichage fonctionnel (116a-116c ; 117) sont agencés sur un boîtier d'actionnement (103) recevant l'élément d'actionnement (101a, 101b) et/ou sur un support de partie de commande (104) maintenant l'élément d'actionnement (101a, 101b) et/ou sur une prise de remorque (106), notamment son boîtier de prise (108) ou son couvercle de prise (109), et/ou un élément à complémentarité de formes (24a-24g) ou un support d'élément à complémentarité de formes (78) supportant l'élément à complémentarité de formes (24a-24g) du dispositif de verrouillage (20a-20g).

14. Attelage selon l'une quelconque des revendications précédentes, **caractérisé en ce qu'**il, notamment sa commande (69), présente une entrée de commutation pour l'inactivation du commutateur d'entraînement (100a, 100b), notamment en mode de marche du véhicule automobile (19) et/ou lorsque la clé de véhicule (115) est retirée d'une serrure de contact du véhicule automobile (19) et/ou pour l'activation du commutateur d'entraînement (100a, 100b) lorsque la porte ou le hayon du véhicule automobile (19) est ouvert.

15. Attelage selon l'une quelconque des revendications précédentes, **caractérisé en ce que** sa commande (69) est configurée pour l'activation du commutateur d'entraînement (100a, 100b) à l'aide d'au moins une condition de déclenchement pour un intervalle de temps, l'entraînement de verrouillage (21a-21g) pouvant être démarré dans l'intervalle de temps par le commutateur d'entraînement (100a, 100b).
